# EUROPEAN PATENT APPLICATION

(11) **EP 4 654 351 A1**
(43) Date of publication of application: **26.11.2025**
(21) Application number: 24795889.5
(22) Date of filing: 15.04.2024
(51) Int. Cl.: H01M 50/231, H01M 50/593

(54) **BATTERY SHELL, BATTERY CELL, BATTERY AND ELECTRIC APPARATUS**

(30) Priority: 25.04.2023 CN 202310458369
(71) Applicant: Contemporary Amperex Technology Co., Limited, Ningde, Fujian 352100 (CN)
(72) Inventor: GAO, Yanling, Ningde, Fujian 352100 (CN); GAO, Jiajing, Ningde, Fujian 352100 (CN); YAN, Zunguang, Ningde, Fujian 352100 (CN); WU, Anwei, Ningde, Fujian 352100 (CN)
(74) Representative: Kraus & Lederer PartGmbB
(86) International application number: PCT/CN2024/087777
(87) International publication number: WO 2024/222508

(57) **Abstract**

A battery shell, a battery cell, a battery, and an electrical device. The battery shell comprises a shell side wall and a shell end wall, which are mutually connected, wherein an attachment weld is provided at the joint between the shell side wall and the shell end wall and is positioned at an end face of the battery shell. The battery shell further comprises an insulating protective film and an insulating coating, wherein the outer side of the shell side wall is connected to the insulating protective film, and the outer side of the attachment weld is covered with the insulating coating. The battery shell provided in the embodiment of the present application covers the attachment weld in the form of the insulating coating for protection, and the insulating protective film is thus not required to be turned over, such that the coating process of the insulating protective film is simpler to operate, and the problem of the attachment weld being corroded can be more reliably ameliorated.

## Description

The present application claims the priority of the Chinese patent application No. 202310458369.6 filed to the China Patent Office on April 25, 2023, and entitled "Battery Shell, Battery Cell, Battery and Electrical Device", of which the entire contents are incorporated herein by reference.

### TECHNICAL FIELD

The present application relates to the technical field of batteries, in particular to a battery shell, a battery cell, a battery and an electrical device.

### BACKGROUND

In current power batteries, an insulating protective film is usually pasted on a side face of a battery shell to achieve insulation and corrosion prevention. Since an attachment weld on the end face of the battery shell is prone to being corroded, the insulating protective film is generally folded by folding edges and pasted to cover the attachment weld. However, in a manner in which the insulating protective film is folded to cover the attachment weld, a coating process of the insulating protective film is complicated to operate, and the anti-corrosion protection of the attachment weld is prone to failure.

### SUMMARY OF THE INVENTION

In view of the above problems, the present application provides a battery shell, a battery cell, a battery and an electrical device, wherein a coating process of an insulating protective film is simpler to operate, and a problem of an attachment weld being corroded can be more reliably ameliorated.

Examples of the present application are realized as follows:
in a first aspect, an example of the present application provides a battery shell, including a shell side wall and a shell end wall which are mutually connected, wherein an attachment weld is provided at a joint between the shell side wall and the shell end wall and is positioned at an end face of the battery shell; and the battery shell further includes an insulating protective film and an insulating coating, an outer side of the shell side wall is connected to the insulating protective film, and an outer side of the attachment weld is covered with the insulating coating.

In the battery shell provided by the example of the present application, the outer side of the shell side wall achieves insulation and anti-corrosion protection through the insulating protective film, and the attachment weld achieves anti-corrosion through the insulating coating. In this example, there is no need to fold the insulating protective film, which makes the coating process of the insulating protective film simpler to operate; moreover, there is no problem of failure of the anti-corrosion protection of the attachment weld caused by flanging and warping of the insulating protective film. The attachment weld can be more reliably covered in a manner of the coating, thereby more reliably ameliorating the problem of the attachment weld being corroded.

In some examples, an edge region of the insulating protective film is connected to the insulating coating. In this example, the insulating protective film is connected to the insulating coating, so that there is no uninsulated and unprotected region between the insulating protective film and the insulating coating, and the insulation performance and anti-corrosion performance of the battery shell are better.

In some examples, a surface area of the outer side of the shell side wall is S1, a surface area of a region corresponding to the insulating protective film in the outer side of the shell side wall is S2, and S2=S1×(80%-95%). In this example, most regions in the shell side wall correspond to the insulating protective film, so that the insulating protective film can better insulate and prevent corrosion of the shell side wall.

In some examples, in a circumferential direction of the shell side wall, a ratio of an overlapping dimension of two ends of the insulating protective film to an outer side circumference of the shell side wall is (3-10):(145-750). In this example, the two ends of the insulating protective film overlap by a certain dimension in the circumferential direction of the shell side wall. On the one hand, the insulating protective film effectively insulates and prevents the corrosion of the shell side wall in the entire circumferential direction; on the other hand, material waste and cost increase caused by excessive overlap of the two ends of the insulating protective film are avoided, and meanwhile, excessive impact on energy density of the battery cell, the dimension of the battery shell, and the like is avoided.

In some examples, the insulating coating has a first coating portion and a second coating portion which are mutually connected, the first coating portion is positioned at an end face of the battery shell, at least a part of the first coating portion covers the outer side of the attachment weld, and the second coating portion is positioned on the outer side of the shell side wall and connected to the edge region of the insulating protective film. In this example, the insulating coating is configured with the second coating portion positioned on the outer side of the shell side wall. The second coating portion is connected to the edge region of the insulating protective film, so that the insulating protective film and the insulating coating can be connected more reliably and conveniently.

In some examples, the second coating portion covers an end part of the outer side of the shell side wall, and at least a part of the second coating portion is covered by the insulating protective film. In this example, the second coating portion covers the outer side of the shell side wall and is covered by the insulating protective film, that is, the second coating portion is positioned between the shell side wall and the insulating protective film. In a preparation process, the second coating portion may be formed by first spraying on the outer side of the shell side wall and then pasting and connecting the insulating protective film. The preparation process is convenient to operate, and the second coating portion can be more firmly connected to the outer side of the shell side wall.

In some examples, at least a part of the second coating portion covers an outer side of the edge region of the insulating protective film. In this example, the second coating portion covers the outer side of the insulating protective film. In the preparation process, the insulating protective film may be first pasted and connected, and then the second coating portion may be formed by spraying, so that the edge region of the insulating protective film can better fit with the outer side of the shell side wall.

In some examples, an end face of the edge region of the insulating protective film is connected to the insulating coating. In this example, the insulating coating can be formed only by spraying on the end face of the battery shell. The preparation process is convenient to operate and can save a material of the insulating coating.

In some examples, the outer side of the shell end wall and the outer side of the attachment weld are both covered with the insulating coating. In this example, the insulating coating covers the outer side of the shell end wall and the attachment weld. Compared with only covering the outer side of the attachment weld with the insulating coating, the end face of the battery shell can be better prevented from corrosion, and the preparation process is simpler.

In some examples, the insulating coating is annular. In this example, the insulating coating is annular and mainly covers the attachment weld, and there is no need to cover the entire shell end wall, which can save the material of the insulating coating.

In some examples, the surface area of the outer side of the shell side wall is S1, a surface area of a region corresponding to the second coating portion in the outer side of the shell side wall is S3, and S3=S1×(5%-20%). In this example, a region with a certain surface area proportion in the shell side wall corresponds to the second coating portion, that is, the second coating portion overlaps with the shell side wall by a certain region area. On the one hand, the second coating portion and the edge region of the insulating protective film can be achieved more reliably and conveniently; on the other hand, the material waste and the cost increase caused by excessive overlap of the second coating portion and the shell side wall are avoided, and meanwhile, excessive impact on the energy density of the battery cell, the dimension of the battery shell, and the like is avoided.

In some examples, in a height direction of the shell side wall, a dimension of the shell side wall is H1, an overlapping dimension of the second coating portion and the insulating protective film is H2, and H2=H1×(2%-10%). In this example, the shell side wall and the second coating portion overlap by a certain dimension in the height direction of the shell side wall. On the one hand, the second coating portion and the insulating protective film can be connected more reliably and conveniently; on the other hand, the material waste and the cost increase caused by excessive overlap of the second coating portion and the insulating protective film are avoided, and meanwhile, excessive impact on the energy density of the battery cell, the dimension of the battery shell, and the like is avoided.

In some examples, a thickness of the insulating protective film is in a range from 50 µm to 120 µm. In this example, the insulating protective film has a suitable thickness, which can exert good insulation performance and anti-corrosion performance, while avoiding the material waste and the cost increase caused by an excessive thickness, and meanwhile, avoiding excessive impact on the energy density of the battery cell, the dimension of the battery shell, and the like.

In some examples, a thickness of the insulating coating is in a range from 50 µm to 120 µm. In this example, the insulating coating has a suitable thickness, which can exert the good insulation performance and anti-corrosion performance, while avoiding the material waste and the cost increase caused by an excessive thickness, and meanwhile, avoiding excessive impact on the energy density of the battery cell, the dimension of the battery shell, and the like.

In some examples, the insulating protective film includes at least one connecting layer and at least one base film layer, the insulating protective film is connected to the outer side of the shell side wall through the connecting layer, and a surface layer of the insulating protective film away from the shell side wall is the base film layer; wherein, the connecting layer is formed by photocuring an adhesive layer including an adhesive, and the adhesive includes 60wt% to 95wt% of acrylic resin, 3wt% to 35wt% of an active monomer, and 0.8wt% to 10wt% of a photoinitiator. In this example, the adhesive layer having the adhesive with the specific composition is photocured to form the connecting layer to achieve the connection between the insulating protective film and the shell side wall, wherein the adhesive takes the acrylic resin as a main component, the acrylic resin cooperates with a specific content of active monomer and the photoinitiator, under the irradiation of light, free radicals are generated by the photoinitiator, so that the acrylic resin and the active monomer generate a complex, and the complex is continuously cross-linked, polymerized and cured into a film, forming a polyester-based three-dimensional network cross-linked body, which can provide better adhesion.

In some examples, the photoinitiator includes one or more of ethyl 2,4,6-trimethylbenzoylphenylphosphonate, 2,4,6-trimethylbenzoyldiphenylphosphine oxide, 1-hydroxycyclohexylphenyl ketone, 2-isopropylthioxanthone, 2-phenylbenzyl-2-dimethylamine-1-(4-morpholinobenzylphenyl)butanone, and 2-hydroxy-2-methyl-1-phenylpropanone. In this example, a specific type of acrylate monomer is used, so that the polyester-based three-dimensional network cross-linked body formed by photocuring has good compactness, thereby providing better rigidity and toughness for the insulating protective film.

In some examples, a total thickness of the base film layer is T1, and a total thickness of the adhesive layer is T2; wherein, T2=T1×(50%-150%); optionally, T2=T1×(80%-120%). In this example, the adhesive layer and the base film layer satisfy a suitable thickness ratio, so that the insulating protective film can have both good adhesion and insulation voltage-withstand performance.

In some examples, the insulating coating includes a photocurable product of an ultraviolet curable ink; wherein the ultraviolet curable ink includes 10wt% to 30wt% of acrylic resin, 40wt% to 80wt% of an active monomer, 2wt% to 10wt% of a photoinitiator, less than or equal to 15wt% of a hydrophobic monomer, less than or equal to 5wt% of a coupling agent and less than or equal to 10wt% of pigment; and viscosity of the active monomer at 50°C is less than or equal to 10 cps. In this example, the ultraviolet curable ink having a specific composition is used and photocured to form the insulating coating. Under the premise that the viscosity of the active monomer at 50°C is less than or equal to 10 cps and the above raw material ratio is met, the ultraviolet curable ink can achieve the viscosity of less than or equal to 100 cps at 50°C, so that the ultraviolet curable ink can form an insulating coating precursor on the outer side of the battery shell in a manner of spraying or printing, and the insulating coating precursor is cured by ultraviolet to form the insulating coating, thereby ameliorating a problem of poor insulation performance on the surface of the battery cell.

In some examples, the active monomer includes a first monomer, and the first monomer is a monofunctional monomer. In this example, the first monomer can improve toughness of the insulating coating formed by ultraviolet curing of the ultraviolet curable ink.

In some examples, the active monomer further includes a second monomer, functionality of the second monomer is greater than or equal to 2, and mass of the second monomer is 30% to 50% of mass of the first monomer. In this example, the second monomer can increase a degree of crosslinking when the ultraviolet curable ink is cured, and when the mass of the second monomer is 30% to 50% of the mass of the first monomer, the insulating coating can maintain both high mechanical property and good toughness.

In some examples, the ultraviolet curable ink includes 0.1wt% to 15wt% of a hydrophobic monomer, and a contact angle between the hydrophobic monomer and water is greater than or equal to 90°. In this example, the hydrophobic monomer can improve the moisture-heat aging resistance and water resistance of the insulating coating formed by ultraviolet curing of the ultraviolet curable ink.

In a second aspect, an example of the present application provides a battery cell, including the battery shell as described in the above example.

In a third aspect, an example of the present application provides a battery, including the battery cell as described in the above example.

In a fourth aspect, an example of the present application provides an electrical device, including the battery shell or the battery cell as described in the above example.

The above description is only a summary of the technical solutions of the examples of the present application. In order to be able to understand the technical means of the present application more clearly, and the technical means can be implemented according to the content of the specification, furthermore, in order to make the above and other objectives, features and advantages of the present application more obvious and understandable, specific implementations of the present application are exemplified below.

### DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided by some examples of the present application;
FIG. 4 is a schematic structural diagram of a first battery shell provided by some examples of the present application;
FIG. 5 is a schematic structural diagram of a second battery shell provided by some examples of the present application;
FIG. 6 is a schematic structural diagram of a third battery shell provided by some examples of the present application;
FIG. 7 is a diagram showing a corresponding relationship between a shell side wall and an insulating protective film in an expanded state in some examples of the present application;
FIG. 8 is a schematic structural diagram of a fourth battery shell provided by some examples of the present application;
FIG. 9 is a diagram showing a corresponding relationship between a shell side wall and a second coating portion in an expanded state in some examples of the present application;
FIG. 10 is a partial enlarged view of a position X in FIG. 4;
FIG. 11 is a schematic diagram of a connecting relationship between a first insulating protective film and a battery shell provided in some examples of the present application;
FIG. 12 is a schematic diagram of a connecting relationship between a second insulating protective film and a battery shell provided in some examples of the present application;

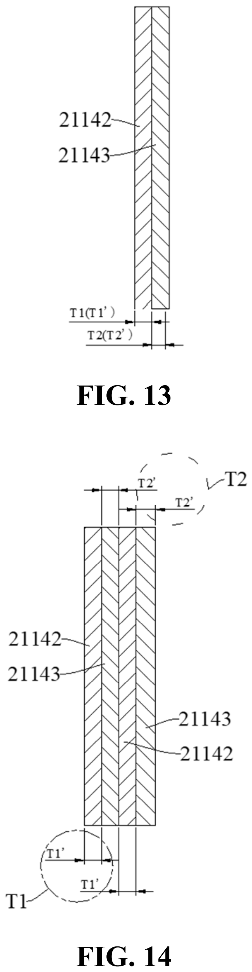

FIG. 13 is a structural schematic diagram of a first insulating protective film before photocuring provided in some examples of the present application; and
FIG. 14 is a structural schematic diagram of a first insulating protective film before photocuring provided in some examples of the present application.

### Icons:

1000 - vehicle;
100 - battery; 200 - controller; 300 - motor;
10 - box body; 11 - first part; 12 - second part; 13 - accommodating space;
20 - battery cell; 21 - shell; 22 - electrode assembly; 23 - electrode terminal; 24 - pressure relief structure;
211-battery shell; 212-cover;
2111 - shell side wall; 2112 - shell end wall; 2113 - attachment weld; 2114 - insulating protective film; 21141 - connecting layer; 21142-base film layer; 21143 - adhesive layer; 2115-insulating coating; 2115a - first coating portion; and 2115b-second coating portion.

### DETAILED DESCRIPTION

In order to make the objects, technical solutions, and advantages of the embodiments of the present application more clear, the technical solutions of the embodiments of the present application will be described clearly and completely below. In embodiments in which no specific conditions are indicated, conventional conditions or conditions recommended by manufacturers are followed. The reagents or instruments used in which no manufacturers are indicated are all commercially available conventional products.

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as commonly understood by those skilled in the technical field to which the present application belongs. The terms used herein are intended only for the purpose of describing specific embodiments and are not intended to limit the present application. The terms "include" and "have" and any variations thereof in the specification and the claims of the present application and in the above Description of Drawings are intended to encompass non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated.

In the description of the embodiments of the present application, the technical terms "outer", "inner", and the like indicate orientations or positional relationships based on the orientations or positional relationships shown in the drawings, and are intended only to facilitate and simplify the description of the embodiments of the present application, and are not intended to indicate or imply that the apparatus or element referred to must have a particular orientation, or be constructed and operated in a particular orientation, and therefore should not be construed as limitation of the embodiments of the present application.

In the description of the embodiments of the present application, unless otherwise explicitly stipulated and defined, the technical terms of "mount", "connected", "connecting" and "fixed" should be understood in a broad sense. For example, there may be a fixed connection, a detachable connection, or an integrated connection; and there may be a direct connection or an indirect connection through an intermediate medium. For those of ordinary skill in the art, the specific meanings of the aforementioned terms in the embodiments of the present application can be understood according to specific situations.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the embodiments of the present application, like reference numerals indicate like components, and for the sake of brevity, detailed description of the same components is omitted in different embodiments. It should be understood that a height, length, width and other dimensions of the various parts in the example of the present application shown in the drawings, as well as an overall height, length and width of an integrated apparatus, are for illustrative purposes only, and should not constitute any limitation to the present application.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly expanding.

A battery shell (such as a cylindrical battery shell) is generally made of steel, which is not resistant to slight acid and alkali corrosion and is prone to aging under a use environment.

In some technical solutions currently proposed, a pressure-sensitive adhesive insulating protective film is pasted on a side face of the battery shell to meet insulation requirements in an assembly process of a battery and achieve an anti-corrosion function at the same time. Since an attachment weld on an end face of the battery shell is prone to being corroded, in some cases, the insulating protective film is mainly pasted on a shell side wall of the battery shell, and then the insulating protective film is generally folded by folding edges and pasted to cover the attachment weld.

However, in a manner in which the insulating protective film is folded to cover the attachment weld, a coating process of the insulating protective film is complicated to operate, and a folded edge of the insulating protective film used to cover the attachment weld is prone to warping, resulting in failure of the anti-corrosion protection of the attachment weld, and the attachment weld on the end face of the battery shell is still prone to being corroded.

Based on this, the applicant has designed a battery shell, the attachment weld on the end face of the battery shell is covered with the insulating coating, and there is no need to fold the insulating protective film, which makes the coating process of the insulating protective film simpler to operate; moreover, there is no problem of failure of the anti-corrosion protection of the attachment weld caused by flanging and warping of the insulating protective film. The attachment weld can be more reliably covered in a manner of the coating, thereby more reliably ameliorating the problem of the attachment weld on the end face of the battery shell being prone to being corroded.

In the present application, an electrical device may be in various forms, for example, a mobile phone, a portable device, a laptop, an electric motorcycle, an electric vehicle, a ship, a spacecraft, an electric toy, an electric tool, or the like. For example, the spacecraft includes an airplane, a rocket, a space shuttle, a spaceship, or the like. The electric toy includes a fixed or mobile electric toy, such as a game console, an electric vehicle toy, an electric ship toy, an electric airplane toy, or the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

For the convenience of explanation, the following examples are used for illustration where a vehicle is taken as an electrical device in an example of the present application.

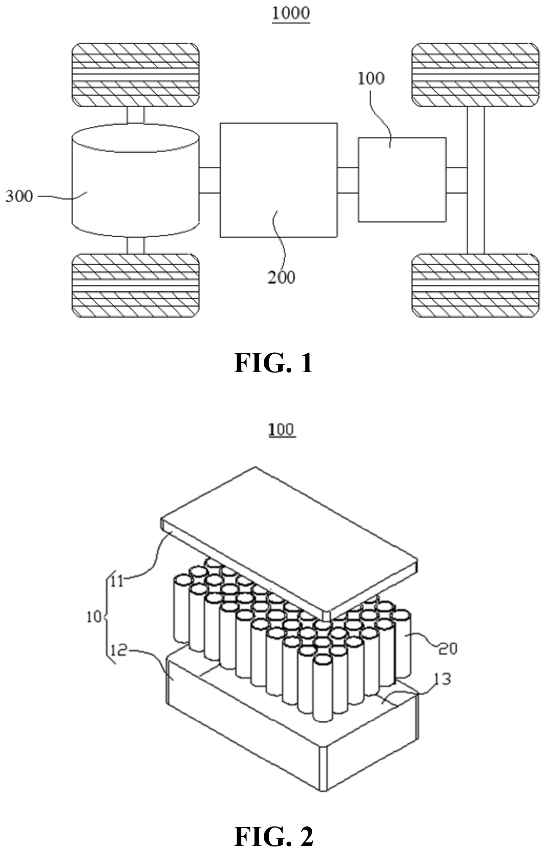

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, etc. A battery 100 is arranged in the vehicle 1000. The battery 100 may be arranged at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 may not only serve as the operating power source of the vehicle 1000, but also serve as a driving power source of the vehicle 1000 to replace or partially replace fuel or natural gas to provide driving power for the vehicle 1000.

In the present application, the battery 100 refers to a single physical module including a plurality of battery cells 20 to provide a higher voltage and capacity, which can be in a form of a battery pack, a battery module, etc. The battery 100 may include a box body 10 used for encapsulating the plurality of battery cells 20. The box body 10 can prevent liquid or other foreign matters from affecting charging or discharging of the battery cells 20.

Referring to FIG. 2, FIG. 2 is an exploded view of the battery 100 provided by some examples of the present application. The battery 100 comprises a box body 10 and a plurality of battery cells 20. The plurality of battery cells 20 are accommodated in the box body 10. The box body 10 is used for accommodating the battery cell 20, and the box body 10 can have various structures. In some embodiments, the box body 10 can comprise a first part 11 and a second part 12. The first part 11 and the second part 12 cover each other, and the first part 11 and the second part 12 together define the accommodating space 13 for accommodating the battery cell 20. The second part 12 can have a hollow structure with one end open, and the first part 11 has a plate-like structure. The first part 11 covers the open side of the second part 12 to form the box body 10 having the accommodating space 13. The first part 11 and the second part 12 can also both have a hollow structure with one side open, and the open side of the first part 11 covers the open side of the second part 12 to form the box body 10 having the accommodating space 13. Of course, the first part 11 and the second part 12 can have various shapes, such as a cylinder and a cuboid.

In the battery 100, the plurality of battery cells 20 can be connected in series, or in parallel, or in parallel-series. Being connected in parallel-series means that the plurality of battery cells 20 are connected in both series and parallel. The plurality of battery cells 20 can be directly connected in series, or in parallel, or in parallel-series, and an entirety composed of the plurality of battery cells 20 is then accommodated in the box body 10. The case may also be that a plurality of battery cells 20 are connected in series, or in parallel, or in parallel-series in advance to form a battery module, and a plurality of battery modules are then connected in series, or in parallel, or in parallel-series to form an entirety, which is accommodated in the box body 10. The battery 100 may further include other structures. For example, the plurality of battery cells 20 may be electrically connected by a busbar component to realize the connection of the plurality of battery cells 20 in series, or in parallel, or in parallel-series.

The battery cell 20 refers to a smallest unit constituting the battery pack 100. Each battery cell 20 may be a secondary battery 100 or a primary battery 100; or it may be a lithium-sulfur battery 100, a sodium-ion battery 100 or a magnesium-ion battery 100, but is not limited thereto.

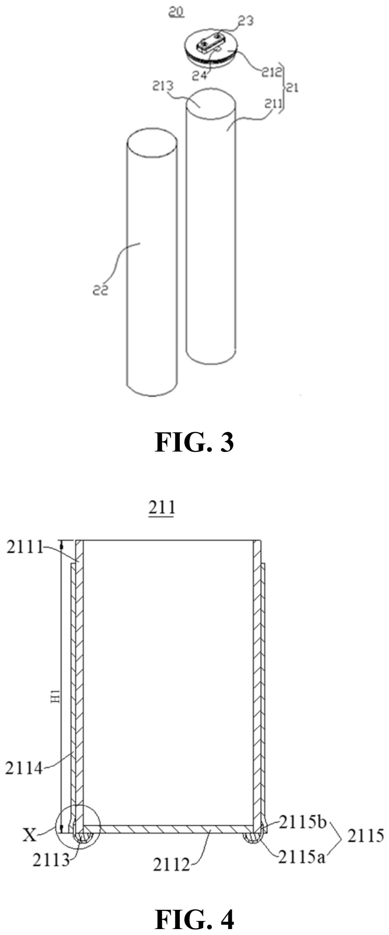

Referring to FIG. 3, each battery cell 20 may include a shell 21, an electrode assembly 22, and an electrolyte solution, where the electrode assembly 22 and the electrolyte solution are both accommodated in the shell 21.

The shells 21 may include battery shells 211 and covers 212. The battery shells 211 are assemblies for matching the covers 212 to form internal sealed spaces of the battery cells 20. The formed sealed spaces may be used to accommodate the electrode assemblies 22, the electrolyte solutions and other components. The covers 212 refer to components that cover openings of the battery shells 211 to isolate the internal environments of the battery cells 20 from the external environment. Shapes of the covers 212 may fit shapes of the battery shells 211 to match the battery shells 211. Functional components such as an electrode terminal 23 and a pressure relief structure 24 can also be disposed on the covers 212. Sealing rings may be disposed between the openings of the battery shells 211 and the covers 212 to achieve sealing between the battery shells 211 and the covers 212.

The battery shells 211 and the covers 212 may be selected from various shapes and dimensions, such as a cuboid, a cylinder, or a hexagonal prism. Specifically, the shapes of the battery shells 211 and the covers 212 may be determined according to the specific shapes and dimensions of the electrode assemblies 22. The battery shells 211 and the covers 212 may be made of various materials, such as but not limited to copper, iron, aluminum, stainless steel, an aluminum alloy, and other metals. The sealing rings may be made of various materials, such as but not limited to polypropylene (PP), polycarbonate (PC), polyethylene terephthalate (PET), and other materials with corrosion resistance to electrolyte solutions, high toughness, and fatigue resistance. A cladding layer may be formed on an outer surface of each battery shell 211, and the cladding layer can be made of various materials, such as but not limited to corrosion-resistant materials such as Ni and Cr.

Each battery assembly 22 may be composed of a positive electrode sheet, a negative electrode sheet, and a separator. The battery cells 20 work mainly relying on movement of metal ions between the positive electrode sheets and the negative electrode sheets.

The positive electrode sheets include positive electrode current collectors and positive electrode active material layers disposed on surfaces of the positive electrode current collectors. Materials of the positive electrode current collectors may be aluminum, and positive electrode active material in the positive electrode active material layers may include positive electrode active materials such as lithium cobalt oxide, lithium iron phosphate, ternary lithium, lithium manganese oxide, and lithium sulfur. The negative electrode sheets include negative electrode current collectors and negative electrode active material layers disposed on surfaces of the negative electrode current collectors. Materials of the negative electrode current collectors may be copper, and the negative electrode active materials in the negative electrode active material layers may be carbon, silicon, and other negative electrode active material materials. In addition, the electrode assemblies 22 may be of a wound structure or a laminated structure, and examples of the present application are not limited thereto.

Next, the battery shells 211, the battery cells 20, the battery 100 and the electrical device proposed in the example of the present application are described in detail.

Referring to FIG. 4 to FIG. 7, in a first aspect, an example of the present application provides a battery shell 211, including a shell side wall 2111 and a shell end wall 2112 which are mutually connected, wherein an attachment weld 2113 is provided at a joint between the shell side wall 2111 and the shell end wall 2112 and is positioned at an end face of the battery shell 211; and the battery shell further includes an insulating protective film 2114 and an insulating coating 2115, an outer side of the shell side wall 2111 is connected to the insulating protective film 2114, and an outer side of the attachment weld 2113 is covered with the insulating coating 2115.

The shell side wall 2111 refers to an annular side wall formed by surrounding a central axis of the battery shell 211, and is of a hollow structure with openings at two ends. An internal cavity is used to accommodate an electrode assembly 22, an electrolyte solution and other components, the opening at one end is used to cooperate with a cover 212, and the opening at the other end is used to cooperate with the shell end wall 2112. A shape of the shell side wall 2111 is not limited. In a cross section perpendicular to the central axis of the battery shell 211, the shape of the shell side wall may be, such as but not limited to, circular, rectangular, hexagonal, etc., for example, circular.

The shell end wall 2112 refers to a shell wall positioned at an end of the battery shell 211, which is, for example, a flat thin-walled structure. The shape of the shell end wall 2112 corresponds to the openings of the shell side wall 2111 and is used to close the openings of the shell side wall 2111.

The attachment weld 2113 refers to a solder structure formed between the shell end wall 2112 and the end of the shell side wall 2111 when the shell end wall 2112 is welded to the end of the shell side wall 2111 to close the opening at one end of the shell side wall 2111. The attachment weld 2113 extends in a circumferential direction of the shell end wall 2112 and the shell side wall 2111, and surrounds an annular solder structure corresponding to the shapes of the shell end wall 2112 and the shell side wall 2111.

The outer side of the attachment weld 2113 refers to a surface of one side of the attachment weld 2113 facing the exterior of the battery shell 211.

The end face of the battery shell 211 refers to a face positioned at the end when the battery shell 211 is placed vertically, and includes the shell end wall 2112 and the attachment weld 2113.

The insulating protective film 2114 refers to a film material with an insulating function, which may be a pressure-sensitive adhesive protective film, a light-curing protective film, etc., and is connected to the outer side of the shell side wall 2111 by, for example but not limited to, bonding. In a case that the outer side of the shell side wall 2111 is connected with the insulating protective film 2114, the insulating protective film 2114 may be connected only to the outer side of the shell side wall 2111, or the insulating protective film 2114 may be additionally connected to the outer side of the shell end wall 2112 and/or the attachment weld 2113.

The insulating coating 2115 refers to a coating with an insulating function, which is connected and covered on the outer side of the attachment weld 2113 by, for example but not limited to, spraying, spin coating, etc. In a case that the outer side of the attachment weld 2113 is covered with the insulating coating 2115, the insulating coating 2115 may be connected to and covered only on the outer side of the attachment weld 2113, or the insulating coating 2115 may be additionally connected to and covered on the outer side of the shell end wall 2112 and/or the shell side wall 2111.

In the battery shell 211 provided by the example of the present application, the outer side of the shell side wall 2111 achieves insulation and anti-corrosion protection through the insulating protective film 2114, and the attachment weld 2113 achieves insulation and anti-corrosion protection through the insulating coating 2115. In this example, there is no need to fold the insulating protective film 2114, which makes the coating process of the insulating protective film 2114 simpler to operate; moreover, there is no problem of failure of the anti-corrosion protection of the attachment weld 2113 caused by flanging and warping of the insulating protective film 2114. The attachment weld 2113 can be more reliably covered in a manner of the coating, thereby more reliably ameliorating the problem of the attachment weld 2113 being corroded.

In some examples, an edge region of the insulating protective film 2114 is connected to the insulating coating 2115.

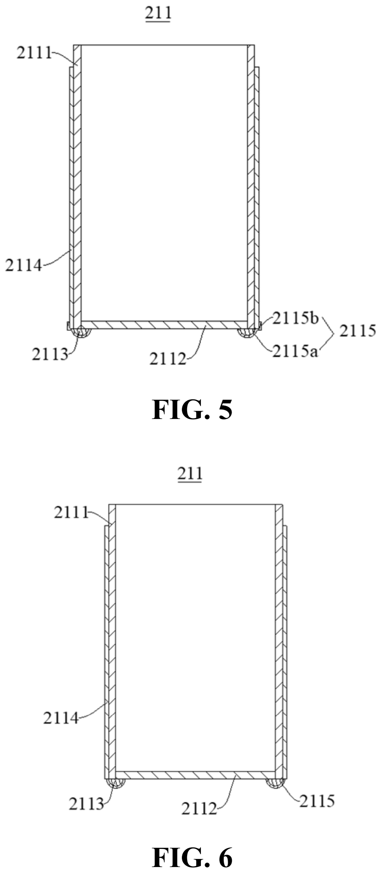

The edge region of the insulating protective film 2114 refers to a portion of the insulating protective film 2114 close to the end face of the battery shell 211 provided with the shell end wall 2112. The edge region of the insulating protective film 2114 may be connected to the insulating coating 2115 through the inner side face, as shown in FIG. 4; the edge region of the insulating protective film 2114 may also be connected to the insulating coating 2115 through the outer side face, as shown in FIG. 5; and the edge region of the insulating protective film 2114 may also be connected to the insulating coating 2115 through the end face, as shown in FIG. 6.

In the example of the present application, the connection between the edge region of the insulating protective film 2114 and the insulating coating 2115 means that the two are seamlessly connected, that is, the portions of the two surrounding in the circumferential direction of the shell end wall 2112 are connected, so that there is no uncovered and unprotected region on the shell side wall 2111 between the two.

In this example, the insulating protective film 2114 is connected to the insulating coating 2115, so that there is no uninsulated and unprotected region between the insulating protective film 2114 and the insulating coating 2115, and the insulation performance and anti-corrosion performance of the battery shell 211 are better.

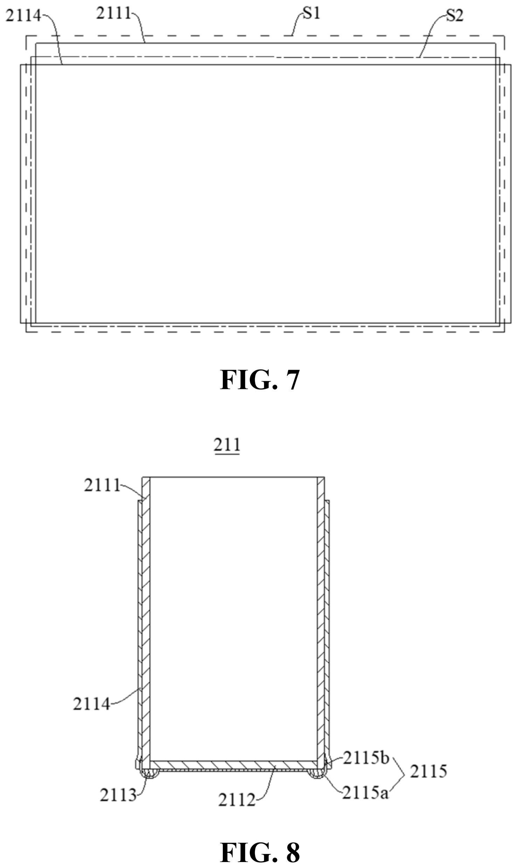

Referring to FIG. 7, in some examples, a surface area of the outer side of the shell side wall 2111 is S1, a surface area of a region corresponding to the insulating protective film 2114 in the outer side of the shell side wall 2111 is S2, and S2=S1×(80%-95%).

The surface area of the outer side of the shell side wall 2111 refers to a surface area corresponding to a region whose central angle is 360° in the shell side wall 2111. That is to say, in the circumferential direction of the shell side wall 2111, when there is overlap between two ends of the shell side wall 2111, an area of the overlapping region is not calculated repeatedly.

The region corresponding to the insulating protective film 2114 in the outer side of the shell side wall 2111 refers to a region on which the insulating protective film 2114 is projected orthogonally to the outer side of the shell side wall 2111. Similarly, in the circumferential direction of the shell side wall 2111, when there is overlap between two ends of the insulating protective film 2114, an area of the overlapping region is not calculated repeatedly.

As an example, the percentage of S2 in S1 is for example, but is not limited to a point value of any one of 80%, 81%, 82%, 83%, 84%, 85%, 86%, 87%, 88%, 89%, 90%, 91%, 92%, 93%, 94%, and 95%, or a range value consisting of any two of the above values.

In this example, most regions in the shell side wall 2111 correspond to the insulating protective film 2114, so that the insulating protective film 2114 can better insulate and prevent corrosion of the shell side wall 2111.

In some examples, in a circumferential direction of the shell side wall 2111, a ratio of an overlapping dimension of two ends of the insulating protective film 2114 to an outer side circumference of the shell side wall 2111 is (3-10):(145-750).

The direction of the overlapping dimension of the two ends of the insulating protective film 2114 is the same as the direction in which the insulating protective film 2114 extends in the circumferential direction of the shell side wall 2111. When the outer side circumference of the shell side wall 2111 is determined, in a case that there is overlap between two ends of the shell side wall 2111, a length of the overlapping region is not calculated repeatedly.

In a first example, the shell side wall 2111 is in a form of a cylinder, and the ratio of the overlapping dimension of the two ends of the insulating protective film 2114 to the outer side circumference of the shell side wall 2111 is (3-10):(145-200). Optionally, the outer side circumference of the shell side wall 2111 is, for example, in a range from 145 mm to 200 mm, and the overlapping dimension of the two ends of the insulating protective film 2114 is, for example, in a range from 3 mm to 10 mm.

In a second example, the shell side wall 2111 is in a form of a square shell, and the ratio of the overlapping dimension of the two ends of the insulating protective film 2114 to the outer side circumference of the shell side wall 2111 is (3-10):(400-750); further optionally, (3-10):(400-500). Optionally, the outer side circumference of the shell side wall 2111 is, for example, in a range from 400 mm to 750 mm, further optionally, in a range from 400 mm to 500 mm, and the overlapping dimension of the two ends of the insulating protective film 2114 is, for example, in a range from 3 mm to 10 mm.

As an example, the overlapping dimension of the two ends of the insulating protective film 2114 is for example, but is not limited to a point value of any one of 3 mm, 4 mm, 5 mm, 6 mm, 7 mm, 8 mm, 9 mm, and 10 mm, or a range value consisting of any two of the above values.

In this example, the two ends of the insulating protective film 2114 overlap by a certain dimension in the circumferential direction of the shell side wall 2111. On the one hand, the insulating protective film 2114 effectively insulates and prevents the corrosion of the shell side wall 2111 in the entire circumferential direction; on the other hand, material waste and cost increase caused by excessive overlap of the two ends of the insulating protective film 2114 are avoided, and meanwhile, excessive impact on energy density of the battery cell 20, the dimension of the battery shell 211, and the like is avoided.

Referring to FIG. 4, FIG. 5 and FIG. 8, in some examples, the insulating coating 2115 has a first coating portion 2115a and a second coating portion 2115b which are mutually connected, the first coating portion 2115a is positioned at an end face of the battery shell 211, at least a part of the first coating portion 2115a covers the outer side of the attachment weld 2113, and the second coating portion 2115b is positioned on the outer side of the shell side wall 2111 and connected to the edge region of the insulating protective film 2114.

The first coating portion 2115a and the second coating portion 2115b both belong to part of the insulating coating 2115. The main difference between the two is the different positions, and materials of the two may be the same or different.

The first coating portion 2115a may only cover the outer side of the attachment weld 2113, as shown in FIG. 4 and FIG. 5. In a case where a partial region of the first coating portion 2115a covers the outer side of the attachment weld 2113, other regions of the first coating portion 2115a may further cover other regions of the end face of the battery shell 211, for example, may further cover at least a part of the outer side of the shell end wall 2112, as shown in FIG. 8.

The second coating portion 2115b may be directly connected to the outer side of the shell side wall 2111. In this way, the second coating portion 2115b may be connected to an inner side face of the edge region of the insulating protective film 2114 through an outer side face, as shown in FIG. 4. The second coating portion 2115b may also be indirectly connected to the outer side of the shell side wall 2111. In this way, the insulating protective film 2114 may be directly connected to the outer side of the shell side wall 2111, and the second coating portion 2115b may be connected to the outer side face of the edge region of the insulating protective film 2114 through an inner side face, as shown in FIG. 5.

In this example, the insulating coating 2115 is configured with the second coating portion 2115b positioned on the outer side of the shell side wall 2111. The second coating portion 2115b is connected to the edge region of the insulating protective film 2114, so that the insulating protective film 2114 and the insulating coating 2115 can be connected more reliably and conveniently.

Referring to FIG. 4, in some examples, the second coating portion 2115b covers an end part of the outer side of the shell side wall 2111, and at least a part of the second coating portion 2115b is covered by the insulating protective film 2114.

In this example, the second coating portion 2115b covers the outer side of the shell side wall 2111 and is covered by the insulating protective film 2114, that is, the second coating portion 2115b is positioned between the shell side wall 2111 and the insulating protective film 2114. In a preparation process, the second coating portion 2115b may be formed by first spraying on the outer side of the shell side wall 2111 and then pasting and connecting the insulating protective film 2114. The preparation process is convenient to operate, and the second coating portion 2115b can be more firmly connected to the outer side of the shell side wall 2111.

Referring to FIG. 5, in some examples, at least a part of the second coating portion 2115b covers an outer side of the edge region of the insulating protective film 2114.

In this example, the second coating portion 2115b covers the outer side of the insulating protective film 2114. In the preparation process, the insulating protective film 2114 may be first pasted and connected, and then the second coating portion 2115b may be formed by spraying, so that the edge region of the insulating protective film 2114 can better fit with the outer side of the shell side wall 2111.

Referring to FIG. 6, in some examples, an end face of the edge region of the insulating protective film 2114 is connected to the insulating coating 2115.

In this example, the insulating coating 2115 can be formed only by spraying on the end face of the battery shell 211. The preparation process is convenient to operate and can save a material of the insulating coating 2115.

Referring to FIG. 8, in some examples, the outer side of the shell end wall 2112 and the outer side of the attachment weld 2113 are both covered with the insulating coating 2115.

In this example, the insulating coating 2115 covers the outer side of the shell end wall 2112 and the attachment weld 2113. Compared with only covering the outer side of the attachment weld 2113 with the insulating coating 2115, the end face of the battery shell 211 can be better prevented from corrosion, and the preparation process is simpler.

In some examples, the insulating coating 2115 is annular.

The annular shape refers to a structure that is connected end to end and is hollow inside, and the shape of the annular shape in an extending direction is not limited to a circle, for example, it may also be a square, or other regular or irregular shapes.

Extending paths of the insulating coating 2115 and the attachment weld 2113 are close, so that the insulating coating 2115 can cover the attachment weld 2113, but the extending paths of the two are not limited to being exactly the same. For example, when the extending path of the attachment weld 2113 is a square, the extending path of the insulating coating 2115 may be a square, a circle, etc.; when the extending path of the attachment weld 2113 is a circle, the extending path of the insulating coating 2115 may also be a square, a circle, etc.

In this example, the insulating coating 2115 is annular and mainly covers the attachment weld 2113, and there is no need to cover the entire shell end wall 2112, which can save the material of the insulating coating 2115.

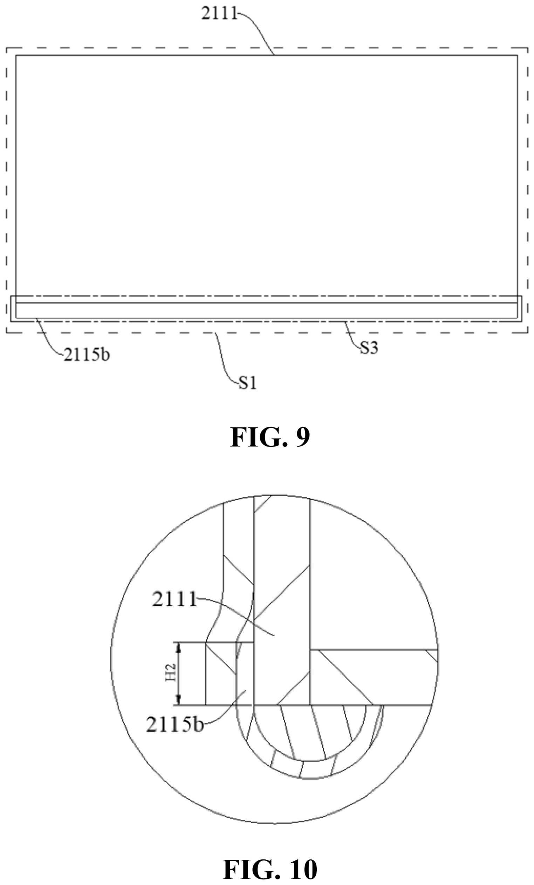

Referring to FIG. 9, in some examples, the surface area of the outer side of the shell side wall 2111 is S1, a surface area of a region corresponding to the second coating portion 2115b in the outer side of the shell side wall 2111 is S3, and S3=S1×(5%-20%).

The region corresponding to the second coating portion 2115b in the outer side of the shell side wall 2111 refers to a region on which the second coating portion 2115b is projected orthogonally to the outer side of the shell side wall 2111.

As an example, the percentage of S3 in S1 is for example, but is not limited to a point value of any one of 5%, 6%, 7%, 8%, 9%, 10%, 11%, 12%, 13%, 14%, 15%, 16%, 17%, 18%, 19%, and 20%, or a range value consisting of any two of the above values.

In this example, a region with a certain surface area proportion in the shell side wall 2111 corresponds to the second coating portion 2115b, that is, the second coating portion 2115b overlaps with the shell side wall 2111 by a certain region area. On the one hand, the second coating portion 2115b and the edge region of the insulating protective film 2114 can be achieved more reliably and conveniently; on the other hand, the material waste and the cost increase caused by excessive overlap of the second coating portion 2115b and the shell side wall 2111 are avoided, and meanwhile, excessive impact on the energy density of the battery cell 20, the dimension of the battery shell 211, and the like is avoided.

Referring to FIG. 4 and FIG. 10, in some examples, in a height direction of the shell side wall 2111, a dimension of the shell side wall 2111 is H1, an overlapping dimension of the second coating portion 2115b and the insulating protective film 2114 is H2, and H2=H1×(2%-10%).

As an example, a ratio of H2/H1 is for example, but is not limited to a point value of any one of 2%, 3%, 4%, 5%, 6%, 7%, 8%, 9%, and 10%, or a range value consisting of any two of the above values.

In this example, the shell side wall 2111 and the second coating portion 2115b overlap by a certain dimension in the height direction of the shell side wall 2111. On the one hand, the second coating portion 2115b and the insulating protective film 2114 can be connected more reliably and conveniently; on the other hand, the material waste and the cost increase caused by excessive overlap of the second coating portion 2115b and the insulating protective film 2114 are avoided, and meanwhile, excessive impact on the energy density of the battery cell 20, the dimension of the battery shell 211, and the like is avoided.

In some examples, a thickness of the insulating protective film 2114 is in a range from 50 µm to 120 µm.

The thickness of the insulating protective film 2114 refers to a dimension of the insulating protective film 2114 in a direction perpendicular to the surface to which it is connected. In other words, the thickness of the insulating protective film 2114 refers to a dimension of the insulating protective film 2114 in a direction perpendicular to the shell side wall 2111 in a specified cross section of the battery shell 211. The specified cross section refers to a cross section passing through the central axis of the battery shell 211 and parallel to the central axis. Taking the cylindrical battery shell 211 as an example, the specified cross section refers to a cross section passing through a cylindrical axis and parallel to the cylindrical axis.

As an example, the thickness of the insulating protective film 2114 is for example, but is not limited to a point value of any one of 50 µm, 60 µm, 70 µm, 80 µm, 90 µm, 100 µm, 110 µm and 120 µm, or a range value consisting of any two of the above values.

In this example, the insulating protective film 2114 has a suitable thickness, which can exert good insulation performance and anti-corrosion performance, while avoiding the material waste and the cost increase caused by an excessive thickness, and meanwhile, avoiding excessive impact on the energy density of the battery cell 20, the dimension of the battery shell 211, and the like.

In some examples, a thickness of the insulating coating 2115 is in a range from 50 µm to 120 µm.

The thickness of the insulating coating 2115 refers to a dimension of the insulating coating 2115 in a direction perpendicular to the surface to which it is attached. Taking the thickness of the second coating portion 2115b as an example, the thickness refers to a dimension of the second coating portion 2115b in a direction perpendicular to the shell side wall 2111 in the specified cross section of the battery shell 211. Here, the specified cross section refers to a cross section passing through the central axis of the battery shell 211 and parallel to the central axis.

As an example, the thickness of the insulating coating 2115 is for example, but is not limited to a point value of any one of 50 µm, 60 µm, 70 µm, 80 µm, 90 µm, 100 µm, 110 µm and 120 µm, or a range value consisting of any two of the above values.

In this example, the insulating coating 2115 has a suitable thickness, which can exert good insulation performance and anti-corrosion performance, while avoiding the material waste and the cost increase caused by an excessive thickness, and meanwhile, avoiding excessive impact on the energy density of the battery cell 20, the dimension of the battery shell 211, and the like.

In some technical solutions, a pressure-sensitive insulating protective film 2114 is pasted on a side face of the battery shell 211 to meet insulation requirements in an assembly process of a battery 100 and achieve an anti-corrosion function at the same time. However, the current pressure-sensitive insulating protective film 2114 has a low bonding strength with the surface of the battery shell 211, and there is a risk of interlayer failure under harsh working conditions.

Based on this, some examples of the present application provide an insulating protective film 2114 including a specific adhesive as a raw material, wherein the adhesive includes a specific content of acrylic resin, an active monomer and a photoinitiator, and exemplarily further includes a suitable content of coupling agent, and an additive and pigment may further be added as needed. The additive includes, for example but not limited to, one or more of a leveling agent, a plasticizer, a stabilizer and an inhibitor. The adhesive is used for an adhesive layer 21143 of the insulating film. The adhesive layer 21143 forms a connecting layer 21141 in the insulating protective film 2114 bonded to the surface of the battery shell 211 under the action of photocuring. A polyester-based three-dimensional network cross-linked body is formed in the connecting layer 21141, which can provide better adhesion for the insulating protective film 2114 and improve the bonding strength between the insulating protective film 2114 and the surface of the battery shell 211.

The following is a description of some exemplary examples of the insulating protective film 2114.

In some examples, the insulating protective film 2114 includes at least one connecting layer 21141 and at least one base film layer 21142, the insulating protective film 2114 is connected to the outer side of the shell side wall 2111 through the connecting layer 21141, and a surface layer of the insulating protective film 2114 away from the shell side wall 2111 is the base film layer 21142; wherein, the connecting layer 21141 is formed by photocuring an adhesive layer 21143 including the adhesive, and the adhesive includes 60wt% to 95wt% of acrylic resin, 3wt% to 35wt% of an active monomer, and 0.8wt% to 10wt% of a photoinitiator.

The base film layer 21142 is a film layer with insulating performance, for example, an insulating polyester film PET.

Optionally, the adhesive includes: 60wt% to 88wt% of the acrylic resin, 10wt% to 20wt% of the active monomer, 2wt% to 5wt% of the photoinitiator, less than or equal to 5wt% of the coupling agent and less than or equal to 10wt% of the pigment.

The acrylic resin is a polymer prepared by polymerizing acrylic acid or acrylic acid derivatives as monomers, or a polymer prepared by copolymerizing acrylic acid or acrylic acid derivatives as the main with other unsaturated compounds.

The type of the acrylic resin is not limited, for example, including one or more of ARONIX M-7100, ARONIX M-8030, ARONIX M-8060, ARONIX M-90, AgiSyn 720, NeoRad P-56, Allnex unsaturated polyester resin UVECOAT@9010, Allnex unsaturated polyester resin UVECOAT@2100 and Allnex unsaturated polyester resin UVECOAT@3005.

The content of the acrylic resin in the adhesive is, for example but not limited to, a point value of any one of 50wt%, 55wt%, 60wt%, 65wt%, 70wt%, 75wt%, 80wt%, 85wt%, 90wt% and 95wt%, or a range value consisting of any two of the above values.

The active monomer is a material that can improve the rheological properties of an oligomer formed during a photocuring process of the adhesive, and may include one or more active monomers with monofunctionality, difunctionality, trifunctionality, and higher functionality.

The content of the active monomer in the adhesive is, for example but not limited to, a point value of any one of 3wt%, 4wt%, 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, 31wt%, 32wt%, 33wt%, 34wt% and 35wt%, or a range value consisting of any two of the above values.

The photoinitiator, also known as a photosensitizer or a photocuring agent, is a type of compound that can absorb energy of a certain wavelength in a ultraviolet region (250 nm-420 nm) or a visible light region (400 nm-800 nm) to produce free radicals, cations, etc., thereby initiating monomer polymerization, cross-linking and curing.

The content of the photoinitiator in the adhesive is, for example but not limited to, a point value of any one of 0.8wt%, 1wt%, 1.5wt%, 2wt%, 2.5wt%, 3wt%, 3.5wt%, 4wt%, 4.5wt%, 5wt%, 5.5wt%, 6wt%, 6.5wt%, 7wt%, 7.5wt%, 8wt%, 8.5wt%, 9wt%, 9.5wt% and 10wt%, or a range value consisting of any two of the above values.

In this example, the adhesive layer 21143 having the adhesive with the specific composition is photocured to form the connecting layer 21141 to achieve the connection between the insulating protective film 2114 and the shell side wall 2111, wherein the adhesive takes the acrylic resin as a main component, the acrylic resin cooperates with a specific content of active monomer and the photoinitiator, under the irradiation of light, free radicals are generated by the photoinitiator, so that the acrylic resin and the active monomer generate a complex, and the complex is continuously cross-linked, polymerized and cured into a film, forming the polyester-based three-dimensional network cross-linked body, which can provide better adhesion.

In some examples, the adhesive includes 60wt% to 88wt% of the acrylic resin, 8wt% to 28wt% of the active monomer, and 2wt% to 8wt% of the photoinitiator.

Optionally, the adhesive includes 60wt% to 88wt% of the acrylic resin, 10wt% to 20wt% of the active monomer, and 2wt% to 5wt% of the photoinitiator.

It should be noted that, in the example of the present application, when the contents of the above components are valued within a specific range, if the sum is less than 100%, it means that other components such as the solvent and the additive may also exist in the adhesive.

In this example, the acrylic resin, the active monomer and the photoinitiator have a more suitable usage ratio, and can have the good bonding strength, toughness and insulation voltage-withstand performance.

In some examples, the active monomer includes an acrylate monomer.

The acrylate monomer refers to a monomer of acrylic acid or acrylic acid derivatives.

In this example, the acrylate monomer can make the polyester-based three-dimensional network cross-linked body formed by photocuring have good compactness, thereby providing good rigidity and toughness for the insulating protective film 2114.

In some examples, the acrylate monomer includes one or more of isobornyl acrylate, trimethylolpropane triacrylate, diethylene glycol diacrylate, dimethylolethane triacrylate, tripropylene glycol diacrylate, 2-ethylethyl acrylate, β-hydroxyethyl methacrylate, dipentaerythritol pentaacrylate, 2-methoxyethyl acrylate, bisphenol alpha dimethacrylate, 1,6-hexanediol diacrylate, and tetrahydrofuran acrylate.

In some exemplary examples, the acrylate monomer includes one or more of dimethylolethane triacrylate, bisphenol alpha dimethacrylate, tetrahydrofuran acrylate, and diethylene glycol diacrylate.

In this example, a specific type of acrylate monomer is used, so that the polyester-based three-dimensional network cross-linked body formed by photocuring has good compactness, thereby providing better rigidity and toughness for the insulating protective film 2114.

In some examples, the photoinitiator includes one or more of ethyl 2,4,6-trimethylbenzoylphenylphosphonate, 2,4,6-trimethylbenzoyldiphenylphosphine oxide, 1-hydroxycyclohexylphenyl ketone, 2-isopropylthioxanthone, 2-phenylbenzyl-2-dimethylamine-1-(4-morpholinobenzylphenyl)butanone, and 2-hydroxy-2-methyl-1-phenylpropanone.

In this example, a specific type of acrylate monomer is used, so that the polyester-based three-dimensional network cross-linked body formed by photocuring has good compactness, thereby providing better rigidity and toughness for the insulating protective film 2114.

In some examples, the photoinitiator includes at least two of ethyl 2,4,6-trimethylbenzoylphenylphosphonate, 2,4,6-trimethylbenzoyldiphenylphosphine oxide, 1-hydroxycyclohexylphenyl ketone, 2-isopropylthioxanthone, 2-phenylbenzyl-2-dimethylamine-1-(4-morpholinobenzylphenyl)butanone, and 2-hydroxy-2-methyl-1-phenylpropanone.

In some exemplary examples, the photoinitiator includes at least two of 2,4,6-trimethylbenzoyldiphenylphosphine oxide, ethyl 2,4,6-trimethylbenzoylphenylphosphonate, 2-isopropylthioxanthone, and 1-hydroxycyclohexylphenyl ketone.

In this example, at least two specific types of photoinitiators are used. The photoinitiators can cover a wider UV absorption wavelength and can better initiate cross-linking and curing of the adhesive under irradiation of the ultraviolet, so that the adhesive can have a higher degree of curing under the irradiation of the ultraviolet, thereby providing better adhesion and rigidity for the insulating protective film 2114.

In some examples, the photoinitiator includes 1-hydroxycyclohexylphenyl ketone. Optionally, the mass proportion of 1-hydroxycyclohexylphenyl ketone in the photoinitiator is, for example, 80wt% to 95wt%, such as but not limited to, a point value of any one of 80wt%, 81wt%, 82wt%, 83wt%, 84wt%, 85wt%, 86wt%, 87wt%, 88wt%, 89wt%, 90wt%, 91wt%, 92wt%, 93wt%, 94wt% and 95wt%, or a range value consisting of any two of the above values.

In some exemplary examples, the photoinitiator includes 1-hydroxycyclohexylphenyl ketone and ethyl 2,4,6-trimethylbenzoylphenylphosphonate.

In this example, at least two specific types of photoinitiators are used and at least contain 1-hydroxycyclohexylphenyl ketone, which can better initiate cross-linking and curing of the adhesive under irradiation of the ultraviolet, so that the adhesive can have a higher degree of curing under the irradiation of the ultraviolet, thereby providing better adhesion and rigidity for the insulating protective film 2114.

In some examples, the adhesive further includes less than or equal to 5wt% of coupling agent.

The coupling agent is a type of substances with two functional groups of different properties, one is an inorganic-philic group and the other is an organic-philic group.

The content of the coupling agent in the adhesive is, for example but not limited to, a point value of any one of 0wt%, 1wt%, 2wt%, 3wt%, 4wt% and 5wt%, or a range value consisting of any two of the above values.

In the example of the present application, the content of the coupling agent in the adhesive may be 0, and whether to add the coupling agent may be selected as needed.

In this example, the adhesive further includes a certain content of coupling agent, and the coupling agent can provide a bridging effect and provide the insulating protective film 2114 with better adhesion and insulation voltage-withstand performance.

In some examples, the coupling agent includes one or more of aminopropyltriethoxysilane, γ-glycidoxypropyltrimethoxysilane, and γ-methacryloxypropyltrimethoxysilane.

KH-550 is aminopropyl triethoxysilane, KH-560 is γ-glycidoxypropyltrimethoxysilane, and KH-570 is γ-methacryloxypropyltrimethoxysilane.

In this example, a specific type of coupling agent is used to provide a good bridging effect, which can effectively provide the insulating protective film 2114 with the better adhesion and insulation voltage-withstand performance, so that the insulating protective film 2114 has higher peel strength and smaller flanging and warping height.

In some examples, the adhesive further includes less than or equal to 10wt% of pigment.

The pigment can dye the adhesive to obtain the insulating protective film 2114 of a target color. The target color includes, for example, benzidine yellow, phthalocyanine blue, permanent red, peach red, ruby red, or light-fast crimson. The pigment includes, for example, one or more of azo pigment, phthalocyanine pigment, quinacridone pigment, isoindolinone pigment, isoindoline pigment, benzimidazolone pigment, dioxazine pigment, perylene pigment, perinone pigment, anthraquinone pigment, anthrapyrimidine pigment, and indanthrene pigment.

The content of the pigment in the adhesive is, for example but not limited to, a point value of any one of 0wt%, 1wt%, 2wt%, 3wt%, 4wt%, 5wt%, 6wt%, 7wt%, 8wt%, 9wt% and 10wt%, or a range value consisting of any two of the above values.

In the example of the present application, the content of the pigment in the adhesive may be 0, and whether to add the pigment may be selected as needed.

In this example, the adhesive further includes a certain content of pigment, which can dye the adhesive to an appropriate degree to achieve the target color.

In the example of the present application, the connecting layer 21141 is formed by photocuring the adhesive layer 21143. The difference between the two lies in cross-linking between the raw materials. The connecting layer 21141 and the adhesive layer 21143 are similar in dimension. Unless otherwise specified, it can be considered that the connecting layer 21141 and the adhesive layer 21143 are equal in dimension.

In some examples, a total thickness of the base film layer 21142 is T1, and a total thickness of the adhesive layer 21143 is T2; wherein, T2=T1×(50%-150%); optionally, T2=T1×(80%-120%).

As an example, ratio of T1 to T2 is expressed as a percentage, for example, but is not limited to a point value of any one of 50%, 60%, 70%, 80%, 90%, 100%, 110%, and 120%, or a range value consisting of any two of the above values.

In this example, the adhesive layer 21143 and the base film layer 21142 satisfy an appropriate thickness ratio, so that the connecting layer 21141 and the base film layer 21142 satisfy a suitable thickness ratio, and thus the insulating protective film 2114 can have both good adhesion and insulation voltage-withstand performance.

In some examples, a thickness of the single adhesive layer 21143 is T2'; wherein T2'≤60 µm.

As an example, the thickness T2' of the single adhesive layer 21143 is for example, but is not limited to a point value of any one of 10 µm, 15 µm, 20 µm, 25 µm, 30 µm, 35 µm, 40 µm, 45 µm, 50 µm, 55 µm and 60 µm, or a range value consisting of any two of the above values.

In this example, the thickness of the single adhesive layer 21143 is below a certain standard, which is conducive to faster curing of the adhesive in the adhesive layer 21143 under the irradiation of light. While the adhesive layer 21143 can provide the good adhesion, the adhesive layer 21143 is prevented being too thick to cause excess performance and affect the production rhythm.

Referring to FIG. 5 and FIG. 6, in some examples, a thickness of the single base film layer 21142 is T1'; wherein 25 µm≤T1'≤80 µm; optionally, 40 µm≤T1'≤60 µm.

As an example, the thickness T1' of the single base film layer 21142 is for example, but is not limited to a point value of any one of 25 µm, 30 µm, 35 µm, 40 µm, 45 µm, 50 µm, 55 µm, 60 µm, 65 µm, 70 µm, 75 µm and 80 µm, or a range value consisting of any two of the above values.

In this example, the thickness of the single base film layer 21142 is within a certain range. While the base film layer 21142 can exert good insulation voltage-withstand performance, the base film layer 21142 is prevented being too thick to cause excess performance and affect the production rhythm.

The following is a description of some exemplary examples of the insulating protective film 2114.

In some examples, the insulating coating 2115 includes a photocurable product of an ultraviolet curable ink; wherein the ultraviolet curable ink includes 10wt% to 30wt% of an acrylic resin, 40wt% to 80wt% of an active monomer, 2wt% to 10wt% of a photoinitiator, less than or equal to 15wt% of a hydrophobic monomer, less than or equal to 5wt% of a coupling agent and less than or equal to 10wt% of pigment; and viscosity of the active monomer at 50°C is less than or equal to 10 cps.

The acrylic resin is selected from any one or more of EBECRYL 572 (functionality is 3, and a number average molecular weight is 1500) of US Allnex, EBECRYL 800 (functionality is 4, and a number average molecular weight is 780) of US Allnex, EBECRYL 837 (functionality is 6, and a number average molecular weight is 2700) of US Allnex, AgiSyn 707 (functionality is 4, and a number average molecular weight is 4700) of Netherlands DSM, AgiSyn 720 (functionality is 4, and a number average molecular weight is 1000) of the Netherlands DSM, and NeoRad P-56 (functionality is 6, and a number average molecular weight is 1800) of the Netherlands DSM.

The photoinitiator is selected from any one or more of 1-hydroxycyclohexylphenyl ketone, ethyl 2,4,6-trimethylbenzoylphenylphosphonate, (2,4,6-trimethylbenzoyl)diphenylphosphine oxide, 2-isopropylthioxanthone, 2-phenylbenzyl-2-dimethylamine-1-(4-morpholinobenzylphenyl)butanone, and 2-hydroxy-2-methyl-1-phenylpropanone.

In this example, the ultraviolet curable ink having a specific composition is used and photocured to form the insulating coating 2115. Under the premise that the viscosity of the active monomer at 50°C is less than or equal to 10 cps and the above raw material ratio is met, the ultraviolet curable ink can achieve the viscosity of less than or equal to 100 cps at 50°C, so that the ultraviolet curable ink can form a precursor of the insulating coating 2115 on the outer side of the battery shell 211 in a manner of spraying or printing, and the precursor of the insulating coating 2115 is cured by ultraviolet to form the insulating coating 2115, thereby ameliorating a problem of poor insulation performance on the surface of the battery cell 20.

Optionally, the viscosity of the active monomer at 50°C is less than or equal to 8 cps.

On the premise that the active monomer satisfies the viscosity of less than or equal to 8 cps at 50°C and meets the above raw material ratio, the ultraviolet curable ink can achieve the viscosity of less than or equal to 80 cps at 50°C.

According to some examples of the present application, optionally, the active monomer includes any one or more of isobornyl acrylate, tetrahydrofuran acrylate, bisphenol alpha dimethacrylate, acrylic ester-2-ethyl ester, methyl methacrylate-β-hydroxyethyl ester, 2-methoxyethyl acrylate, tripropylene glycol diacrylate, diethylene glycol diacrylate, 1,6-hexanediol diacrylate, dimethylolethane triacrylate, trimethylolpropane triacrylate, 3-ethoxy trimethylolpropane triacrylate, pentaerythritol pentaacrylate, and dipentaerythritol pentaacrylate.

The viscosity of the above active monomer at 50°C is less than or equal to 10 cps, which can make the viscosity of the prepared ultraviolet curable ink at 50°C is less than or equal to 100 cps, so that the ultraviolet curable ink meets the requirements of spraying or printing.

The viscosity of both the active monomer and the prepared ultraviolet curable ink at 50°C can be obtained by testing according to the GB/T 2794 method.

In some examples, the active monomer includes a first monomer, and the first monomer is a monofunctional monomer.

The monofunctional monomer refers to that the functionality of the first monomer is 1.

In this example, the first monomer can improve toughness of the insulating coating 2115 formed by ultraviolet curing of the ultraviolet curable ink.

According to some examples of the present application, optionally, the first monomer includes any one or more of isobornyl acrylate, tetrahydrofuran acrylate, bisphenol alpha dimethacrylate, acrylic ester-2-ethyl ester, methyl methacrylate-β-hydroxyethyl ester, and 2-methoxyethyl acrylate.

The above monomer is the monofunctional monomer, which can improve the toughness of the insulating coating 2115 formed by ultraviolet curing the ultraviolet curable ink.

In some examples, the active monomer further includes a second monomer, functionality of the second monomer is greater than or equal to 2, and mass of the second monomer is 30% to 50% of mass of the first monomer.

As an example, a weight of the second monomer is 30%, 35%, 40%, 45% or 50% of a weight of the first monomer.

In this example, the second monomer can increase a degree of crosslinking when the ultraviolet curable ink is cured, and when the mass of the second monomer is 30% to 50% of the mass of the first monomer, the insulating coating 2115 can maintain both high mechanical property and good toughness.

According to some examples of the present application, optionally, the second monomer includes any one or more of tripropylene glycol diacrylate, diethylene glycol diacrylate, 1,6-hexanediol diacrylate, dimethylolethane triacrylate, trimethylolpropane triacrylate, 3-ethoxy trimethylolpropane triacrylate, pentaerythritol pentaacrylate, and dipentaerythritol pentaacrylate.

The functionality of the above monomer is greater than or equal to 2, which can increase a degree of crosslinking when the ultraviolet curable ink is cured, and enable the insulating coating 2115 to maintain both high mechanical property and good toughness.

In some examples, the ultraviolet curable ink includes 0.1wt% to 15wt% of a hydrophobic monomer, and a contact angle between the hydrophobic monomer and water is greater than or equal to 90°.

In this example, the hydrophobic monomer can improve moisture-heat aging resistance and water resistance of the insulating coating 2115 formed by ultraviolet curing of the ultraviolet curable ink.

According to some examples of the present application, optionally, the hydrophobic monomer includes any one or more of trifluoroethyl(methyl)acrylate, hexafluorobutyl(methyl)acrylate, dodecafluoroheptyl methacrylate, tetrafluoropropanol methacrylate, γ-methacryloxypropyltrimethoxysilane, α-methacryloxymethyltrimethylsilane and trimethylsilyl methacrylate.

The above monomer is the hydrophobic monomer, which can improve the moisture-heat aging resistance and water resistance of the insulating coating 2115 formed by ultraviolet curing of the ultraviolet curable ink.

According to some examples of the present application, optionally, the ultraviolet curable ink includes 0.2wt% to 5wt% of the coupling agent.

The coupling agent can enhance the adhesion of the insulating coating 2115 formed by ultraviolet curing of the ultraviolet curable ink to a main body portion of the battery 100 shell 21 and structural adhesive.

According to some examples of the present application, optionally, the coupling agent includes any one or more of KH-550, KH-560 and KH-570.

The above coupling agent can enhance the adhesion of the insulating coating 2115 formed by ultraviolet curing of the ultraviolet curable ink to a main body portion of the battery 100 shell 21 and structural adhesive.

According to some examples of the present application, optionally, the ultraviolet curable ink includes 1wt% to 10wt% of the pigment.

The pigment can dye the insulating coating 2115 to obtain the insulating coating 2115 of a target color.

The target color includes benzidine yellow, phthalocyanine blue, permanent red, peach red, ruby red, or light-fast crimson.

The pigment includes any one or more of azo pigment, phthalocyanine pigment, quinacridone pigment, isoindolinone pigment, isoindoline pigment, benzimidazolone pigment, dioxazine pigment, perylene pigment, perinone pigment, anthraquinone pigment, anthrapyrimidine pigment, and indanthrene pigment.

An example of the present application further provides a method for preparing a battery shell 211, and a process of connecting an insulating protective film 2114 includes: providing a connecting unit having an adhesive layer 21143 and a base film layer 21142, connecting the outermost adhesive layer 21143 of the connecting unit to an outer side of a shell side wall 2111, and allowing the adhesive layer 21143 to be photocured to form a connecting layer 21141.

In some examples, the connecting unit is illuminated and cut, then the outer side of the shell side wall 2111 is coated through the connecting unit, and then the connecting unit is left to cure.

In some examples, the connecting unit is cut, the outer side of the shell side wall 2111 is coated through the connecting unit, and then the connecting unit is illuminated and is left to cure.

An example of the present application further provides a method for preparing a battery shell 211, and a process of connecting an insulating coating 2115 includes: using the ultraviolet curable ink of the above example as a raw material to perform inkjet printing on a target region of an end face of the battery shell 211 provided with a shell end wall to form a precursor of the insulating coating 2115; and curing the precursor of the insulating coating 2115 by ultraviolet irradiation to form the insulating coating 2115.

In the example of the present application, an insulating protective film 2114 may be connected first and then the insulating coating 2115 may be connected; or the insulating coating 2115 may be connected first and then the insulating protective film 2114 may be connected.

In the example of the present application, when the insulating protective film 2114 and the insulating coating 2115 are photocured, the photocuring process exemplarily includes the following conditions: a UV light source is selected as UVLED, and a band of 365 nm, 385 nm or 405 nm is selected according to an absorption band of a photoinitiator. UV activation energy is selected to be in a range from 500 mJ/cm² to 10000 mJ/cm², and an activation time is in a range from 0.1 s to 10 s; further, the UV activation energy is selected to be in a range from 1000 mJ/cm² to 6000 mJ/cm², and an activation time is in a range from 1 s to 6 s.

Referring to FIG. 4, in some examples of the present application, the insulating coating 2115 has a first coating portion 2115a and a second coating portion 2115b which are mutually connected. The second coating portion 2115b covers an end part of the outer side of the shell side wall 2111, and at least a part of the second coating portion 2115b is covered by the insulating protective film 2114. The insulating coating 2115 is in an annular shape corresponding to an attachment weld 2113, an outer side of the attachment weld 2113 is covered by the first coating portion 2115a, and the outer side of the shell end wall 2112 is not covered by the first coating portion 2115a.

Referring to FIG. 8, in some examples of the present application, the insulating coating 2115 has a first coating portion 2115a and a second coating portion 2115b which are mutually connected. The second coating portion 2115b covers an end part of the outer side of the shell side wall 2111, and at least a part of the second coating portion 2115b is covered by the insulating protective film 2114. Both an outer side of the shell end wall 2112 and an outer side of an attachment weld 2113 are covered by the first coating portion 2115a.

In a second aspect, an example of the present application provides a battery cell 20, including the battery shell 211 as described in the above example.

In a third aspect, an example of the present application provides a battery 100, including the battery cell 20 as described in the above example.

In a fourth aspect, an example of the present application provides an electrical device, including the battery shell 211 or the battery cell 20 as described in the above example.

Some specific examples are listed below to better illustrate the present application.

### Experimental example 1

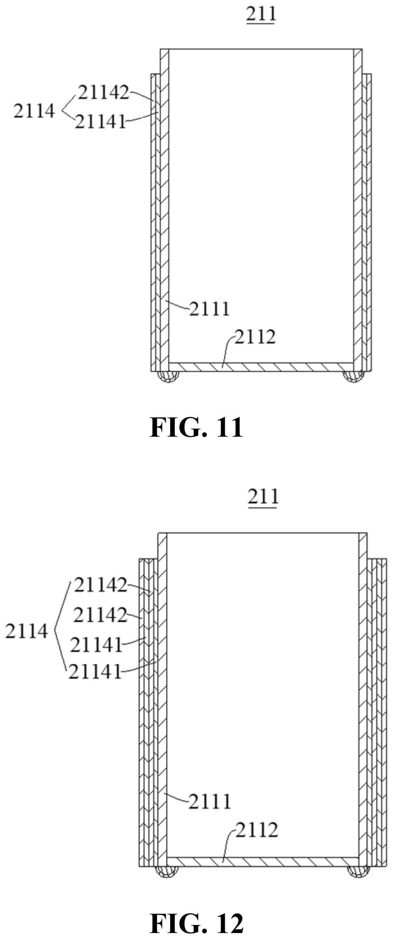

Referring to structures shown in FIG. 11 and FIG. 12, an insulating protective film 2114 is connected to a shell side wall 2111 of a battery shell 211.

Raw materials of an adhesive layer 21143 include: 75wt% of acrylic resin, 17wt% of an active monomer, 5wt% of a photoinitiator, 2.5wt% of a coupling agent and 0.5wt% of pigment. Acrylic resin active monomer type: acrylic resin: model UVECOAT@2100, name Allnex unsaturated polyester resin. The active monomer is tetrahydrofuran acrylate, the photoinitiator is ethyl 2,4,6-trimethylbenzoylphenylphosphonate and 1-hydroxycyclohexylphenyl ketone at a mass ratio of 9:1, the coupling agent is KH-550, and a target color of the pigment is phthalocyanine blue.

An arrangement structure and thickness of a base film layer 21142 in the insulating protective film 2114 and the adhesive layer 21143 forming a connecting layer 21141 are shown in Table 1.1. UVLED is selected as a light source in a process of photocuring the adhesive layer 21143, and band of 370 nm is selected as an absorption band, and the remaining conditions are shown in Table 1.1.

**Table 1.1 Insulating protective film structure and photocuring condition**

| Item | Insulating film structure | | UV irradiation time/ (s) | UV energy (mJ/cm²) |
|---|---|---|---|---|
| | Structure | Thickness (µm) | | |
| Example 1.1 | Base film layer+adhesive layer | 50+50 | 6 | 6000 |
| Example 1.2 | Base film layer+adhesive layer | 50+35 | 4 | 5000 |
| Example 1.3 | Base film layer+adhesive layer | 25+20 | 1 | 2000 |
| Example 1.4 | Base film layer+adhesive layer+base film layer+adhesive layer | 100+40 | 15 | 15000 |
| Example 1.5 | Base film layer+adhesive layer+base film layer+adhesive layer | 50+20+50+20 | 20 | 5000 |

### Experimental example 2

Referring to a structure shown in FIG. 11, an insulating protective film 2114 is connected to a shell side wall 2111 of a battery shell 211.

A base film layer 21142 in the insulating protective film 2114 and an adhesive layer 21143 forming a connecting layer 21141 are each one layer and both have a thickness of 50 µm. UVLED is selected as a light source in a process of photocuring the adhesive layer 21143, and a band of 370 nm is selected as an absorption band. UV activation energy is selected to be 4500 mJ/cm², and an activation time is 3 s.

The selection of component types of the adhesive in various example is shown in Table 2.1, and the selection of component usage amount of the adhesive in various example is shown in Table 2.2. Acrylic resin used by each example is: model UVECOAT@2100, name Allnex unsaturated polyester resin.

**Table 2.1 Component types of adhesives in various examples**

| Item | Active monomer type | Photoinitiator type | Coupling agent type | Target color of pigment |
|---|---|---|---|---|
| Example 2.1 | Dimethylolethane triacrylate | 2,4,6-trimethylbenzoyldiphenylphosphine oxide and 2-isopropylthioxanthone at a mass ratio of 9:1 | KH-550 | Phthalocyanine blue |
| Example 2.2 | Bisphenol alpha dimethacrylate | Ethyl 2,4,6-trimethylbenzoylphenylphosphonate and 2-isopropylthioxanthone at a mass ratio of 9:1 | KH-550 | Phthalocyanine blue |
| Example 2.3 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.4 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.5 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.6 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.7 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.8 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.9 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.10 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.11 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.12 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.13 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.14 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.15 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.16 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |
| Example 2.17 | Diethylene glycol diacrylate | Ethyl 2,4,6-trimethylbenzoylphenylphosphonate | KH-550 | Phthalocyanine blue |
| Example 2.18 | Dimethylolethane triacrylate | Ethyl 2,4,6-trimethylbenzoylphenylphosphonate and 1-hydroxycyclohexylphenyl ketone at a mass ratio of 9:1 | / | Phthalocyanine blue |
| Example 2.19 | Tetrahydrofuran acrylate | Ethyl 2,4,6-trimethylbenzoylphenylphosphonate | KH-550 | Phthalocyanine blue |
| Example 2.20 | Tetrahydrofuran acrylate | Ethyl 2,4,6-trimethylbenzoylphenylphosphonate and 1-hydroxycyclohexylphenyl ketone at a mass ratio of 9:1 | / | Phthalocyanine blue |
| Example 2.21 | Tetrahydrofuran acrylate | Ethyl 2,4,6-trimethylbenzoylphenylphosphonate and 1-hydroxycyclohexylphenyl ketone at a mass ratio of 9:1 | KH-550 | Phthalocyanine blue |

**Table 2.2 Component usage amount of adhesives in various examples**

| Item | Usage amount of acrylic resin | Usage amount of active monomer | Usage amount of photoinitiator | Usage amount of coupling agent | Usage amount of pigment |
|---|---|---|---|---|---|
| | (wt%) | (wt%) | (wt%) | (wt%) | (wt%) |
| Example 2.1 | 75 | 17 | 5 | 2.5 | 0.5 |
| Example 2.2 | 75 | 17 | 5 | 2.5 | 0.5 |
| Example 2.3 | 75 | 17 | 5 | 2.5 | 0.5 |
| Example 2.4 | 60 | 27.2 | 8 | 4 | 0.8 |
| Example 2.5 | 88 | 8.16 | 2.4 | 1.2 | 0.24 |
| Example 2.6 | 95 | 3.4 | 1 | 0.5 | 0.1 |
| Example 2.7 | 87.66 | 3 | 5.84 | 2.92 | 0.58 |
| Example 2.8 | 83.14 | 8 | 5.54 | 2.77 | *0.55* |
| Example 2.9 | 65.06 | 28 | 4.34 | 2.17 | 0.43 |
| Example 2.10 | 58.73 | 35 | 3.92 | 1.96 | 0.39 |
| Example 2.11 | 78.32 | 17.75 | 0.8 | 2.61 | 0.52 |
| Example 2.12 | 77.36 | 17.54 | 2 | 2.58 | 0.52 |
| Example 2.13 | 72.64 | 16.46 | 8 | 2.42 | 0.48 |
| Example 2.14 | 71.05 | 16.11 | 10 | 2.37 | 0.47 |
| Example 2.15 | 69.23 | 15.69 | 4.62 | 10 | 0.46 |
| Example 2.16 | 73.08 | 16.56 | 4.87 | 5 | 0.49 |
| Example 2.17 | 75 | 17 | 5 | 2.5 | 0.5 |
| Example 2.18 | 76.92 | 17.44 | 5.13 | 0 | 0.51 |
| Example 2.19 | 75 | 17 | 5 | 2.5 | 0.5 |
| Example 2.20 | 76.92 | 17.44 | 5.13 | 0 | 0.51 |
| Example 2.21 | 50 | 34 | 10 | 5 | 1 |

In addition, Example 2.22 of Experimental Example 2 further provides an adhesive, including 10wt% of acrylic acid, 15wt% of methyl acrylate, 17wt% of methyl methacrylate, 25wt% of butyl acrylate, 30wt% of ethyl acetate, 0.5wt% of benzoyl peroxide and 2.5wt% of sodium dodecylbenzene sulfonate.

### Experimental example 3

An insulating coating 2115 is formed on a shell end wall of a battery shell 211.

The insulating coating 2115 is formed using ultraviolet curable ink. The ultraviolet curable ink is cured by ultraviolet irradiation, ultraviolet irradiation intensity is in a range from 2000 mW/cm² to 5000 mW/cm², an ultraviolet irradiation time is in a range from 2 s to 20 s, and an ultraviolet wavelength is in a range from 350 nm to 400 nm.

The selection of component usage amount of the ultraviolet curable ink in various example is shown in Table 3.1, and the selection of component types of the ultraviolet curable ink in various example is shown in Table 3.2.

**Table 3.1 Component usage amount of ultraviolet curable ink in various examples**

| Item | Usage amount of acrylic resin (wt%) | Usage amount of first monomer (wt%) | Usage amount of second monomer (wt%) | Usage amount of hydrophobic monomer (wt%) | Usage amount of initiator (wt%) | Usage amount of coupling agent (wt%) | Usage amount of pigment (wt%) | Second monomer/first monomer |
|---|---|---|---|---|---|---|---|---|
| Example 3.1 | 15 | 50 | 20 | 5 | 4 | 3 | 3 | 40% |
| Example 3.2 | 30 | 41.1 | 16.5 | 4.1 | 3.3 | 2.5 | 2.5 | 40% |
| Example 3.3 | 10 | 52.9 | 21.2 | 5.3 | 4.2 | 3.2 | 3.2 | 40% |
| Example 3.4 | 10 | 61 | 19 | 3.3 | 2.7 | 2 | 2 | 31% |
| Example 3.5 | 30 | 27 | 13 | 10 | 8 | 6 | 6 | 48% |
| Example 3.6 | 10 | 54 | 26 | 3.3 | 2.7 | 2 | 2 | 48% |
| Example 3.7 | 30 | 30 | 10 | 10 | 8 | 6 | 6 | 33% |
| Example 3.8 | 13.4 | 44.7 | 17.9 | 15 | 3.6 | 2.7 | 2.7 | 40% |
| Example 3.9 | 15.8 | 52.6 | 21 | 0.1 | 4.2 | 3.1 | 3.2 | 40% |
| Example 3.10 | 14 | 46.9 | 18.8 | 4.7 | 10 | 2.8 | 2.8 | 40% |
| Example 3.11 | 15.3 | 51 | 20.4 | 5.1 | 2 | 3.1 | 3.1 | 40% |
| Example 3.12 | 14.7 | 49 | 19.6 | 4.9 | 3.9 | 5 | 2.9 | 40% |
| Example 3.13 | 15.4 | 51.3 | 20.5 | 5.1 | 4.1 | 0.5 | 3.1 | 40% |
| Example 3.14 | 13.9 | 46.4 | 18.6 | 4.6 | 3.7 | 2.8 | 10 | 40% |
| Example 3.15 | 15.3 | 51 | 20.4 | 5.1 | 4.1 | 3.1 | 1 | 40% |
| Example 3.16 | 15 | 50 | 20 | 5 | 4 | 3 | 3 | 40% |
| Example 3.17 | 15 | 50 | 20 | 5 | 4 | 3 | 3 | 40% |
| Example 3.18 | 15 | 50 | 20 | 5 | 4 | 3 | 3 | 40% |
| Example 3.19 | 15 | 50 | 20 | 5 | 4 | 3 | 3 | 40% |
| Example 3.20 | 15 | 50 | 20 | 5 | 4 | 3 | 3 | 40% |
| Example 3.21 | 15 | 50 | 20 | 5 | 4 | 3 | 3 | 40% |
| Example 3.22 | 15 | 50 | 20 | 5 | 4 | 3 | 3 | 40% |
| Example 3.23 | 15 | 70 | 0 | 5 | 4 | 3 | 3 | 40% |
| Example 3.24 | 15 | 0 | 70 | 5 | 4 | 3 | 3 | 40% |
| Example 3.25 | 15.8 | 52.6 | 21 | 0 | 4.2 | 3.3 | 3.3 | 40% |
| Example 3.26 | 15.5 | 51.5 | 20.6 | 5.2 | 4.1 | 0 | 3.1 | / |
| Example 3.27 | 15 | 50 | 20 | 5 | 4 | 3 | 3 | / |
| Example 3.28 | 15 | 50 | 20 | 5 | 4 | 3 | 3 | 40% |
| Example 3.29 | 15 | 50 | 20 | 5 | 4 | 3 | 3 | 40% |

Table 3.2 Component types of ultraviolet curable ink in various examples

| Item | Acrylic resin type | First monomer type | Second monomer type | Hydrophobic monomer type | Initiator type | Coupling agent type | Target color |
|---|---|---|---|---|---|---|---|
| Example 3.1 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.2 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.3 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.4 | EBECRYL 572 | Isobornyl acrylate | 1,6-hexanediol diacrylate | **Trifluoroethyl** (methyl)acryl ate | Ethyl 2,4,6-trimethylbenzoylph enylphosphonate | KH-550 | Phthalocyanine blue |
| Example 3.5 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.6 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.7 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.8 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.9 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.10 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.11 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.12 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.13 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.14 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.15 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.16 | AgiSyn 707 | Isobornyl acrylate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.17 | EBECRYL 572 | Bisphenol alpha dimethacr vlate | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.18 | EBECRYL 572 | Isobornyl acrylate | 3-ethoxy trimethylolp ropane triacrylate | Trifluoroethyl (methyl)acryl ate | Ethyl 2,4,6-trimethylbenzoylph enylphosphonate | KH-550 | Phthalocyanine blue |
| Example 3.19 | EBECRYL 572 | Isobornyl acrylate | 1,6-hexanediol diacrylate | γ-methacryloxy propyltrimeth oxysilane | Ethyl 2,4,6-trimethylbenzoylph enylphosphonate | KH-550 | Phthalocyanine blue |
| Example 3.20 | EBECRYL 572 | Isobornyl acrylate | 1,6-hexanediol diacrylate | Trifluoroethyl (methyl)acryl ate | (2,4,6-trimethylbenzoyl)d iphenylphosphine oxide | KH-550 | Phthalocyanine blue |
| Example 3.21 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-560 | Phthalocyanine blue |
| Example 3.22 | EBECRYL 572 | Isobornyl acrylate | 1,6-hexanediol diacrylate | Trifluoroethyl (methyl)acryl ate | Ethyl 2,4,6-trimethylbenzoylph enylphosphonate | KH-550 | Ruby red |
| Example 3.23 | EBECRYL 572 | Isobornyl acrylate | / | Trifluoroethyl (methyl)acryl ate | Ethyl 2,4,6-trimethylbenzoylph enylphosphonate | KH-550 | Phthalocyanine blue |
| Example 3.24 | EBECRYL 572 | / | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.25 | EBECRYL 572 | Isobornyl acrylate | 1,6-hexanediol diacrylate | / | Ethyl 2,4,6-trimethylbenzoylph enylphosphonate | KH-550 | Phthalocyanine blue |
| Example 3.26 | EBECRYL 572 | Isobornyl acrylate | 1,6-hexanediol diacrylate | Trifluoroethyl (methyl)acryl ate | Ethyl 2,4,6-trimethylbenzoylph enylphosphonate | / | Phthalocyanine blue |
| Example 3.27 | EBECRYL 572 | Lauryl methacryla te | 1,6-hexanediol diacrylate | Trifluoroethyl (methyl)acryl ate | Ethyl 2,4,6-trimethylbenzoylph enylphosphonate | KH-550 | Phthalocyanine blue |
| Example 3.28 | EBECRYL 572 | Isobornyl acrylate | Ethoxylated bisphenol A dimethacryl ate | Trifluoroethyl (methyl)acryl ate | Ethyl 2,4,6-trimethylbenzoylph enylphosphonate | KH-550 | Phthalocyanine blue |
| Example 3.29 | EBECRYL 572 | Lauryl methacryla te | Ethoxylated bisphenol A dimethacryl ate | Trifluoroethyl (methyl)acryl ate | Ethyl 2,4,6-trimethylbenzoylph enylphosphonate | KH-550 | Phthalocyanine blue |

### Performance test

The performance of the corresponding insulating protective films and insulating coatings in Experimental Examples 1-3 are tested. Results corresponding to Experimental Example 1 are shown in Table 1.2, results corresponding to Experimental Example 2 are shown in Tables 2.3 and 2.4, and results corresponding to Experimental Example 3 are shown in Table 3.3.

A performance test method of the insulating protective film is as follows:

### 1. Performance of preventing flanging and warping

The insulating film is bent 90° and attached to an aluminum shell of a cell, a bending length is 4 mm, a degree of warping is observed, and a warping height of the warping edge is measured.

### 2. Adhesive force

Testing is performed with reference to a GB/T 9286-1998 method, the insulating protective film is adhered to a surface of a 150×100 mm aluminum plate and placed on a horizontal rigid plane. A cross-cut tester is used to cut perpendicular to a sample, and all cuts should penetrate a surface of a substrate. Then the same number of cuts is made in a direction intersecting an original cutting line at 90° to form grid lines. Then, a soft-bristle brush is used to sweep several times, a transparent tape is pasted on top of the grid and flatten, and then the tape is torn off. The adhesive force of the insulating protective film is determined with reference to an adhesive force grading evaluation table, and 180° peel strength is recorded.

### 3. Shear strength

A standard aluminum sheet attached with the insulating protective film is in lap joint with structural adhesive and tested with reference to the GB/T 7124 method.

### 4. Aging test

The standard aluminum sheet attached with the insulating protective film is placed under a 85°C/85% humidity condition for 1000 h, and a shear strength of the insulating protective film after aging is tested and recorded as the shear strength after aging.

### 5. Insulation voltage-withstand test

The insulating protective film is cut into 5×5cm rectangular strips, and the strips are attached to the surface of the aluminum plate. An insulation withstand voltage tester test is used to perform a 2700V, 60s voltage-withstand test. If the leakage current is less than or equal to 0.1 mA, the insulating protective film pssses the test, and the result is expressed as "OK"; and if the leakage current is greater than 0.1 mA, the insulating protective film fails to pass the test, and the result is expressed as "NG".

A performance test method of the insulating coating is as follows:

### 1. Viscosity

Test is performed with reference to a GB/T 2794 method.

### 2. Shear strength

A standard aluminum sheet attached with the insulating coating is in lap joint with structural adhesive and tested with reference to the GB/T 7124 method.

### 3. Insulation voltage-withstand test

The insulating coating is cut into 5×5cm rectangular strips, and the strips are attached to the surface of the aluminum plate. An insulation withstand voltage tester test is used to perform a 2700V, 60s voltage-withstand test. If the leakage current is less than or equal to 0.1 mA, the insulating coating pssses the test.

### 4. Adhesive force

Testing is performed with reference to a GB/T 9286-1998 method, the insulating coating is adhered to a surface of a 150×100 mm aluminum plate and placed on a horizontal rigid plane. A cross-cut tester is used to cut perpendicular to a sample, and all cuts should penetrate a surface of a substrate. Then the same number of cuts is made in a direction intersecting an original cutting line at 90° to form grid lines. Then, a soft-bristle brush is used to sweep several times, a transparent tape is pasted on top of the grid and flatten, and then the tape is torn off. The adhesive force of the insulating coating is determined with reference to an adhesive force grading evaluation table.

### 5. Aging test

The standard aluminum sheet attached with the insulating coating is placed under a 85°C/85% condition for 1000 h, and a shear strength and adhesive force of the insulating coating after aging are tested.

### 6. Water soaking test

The standard aluminum sheet attached with the insulating coating is placed in 85°C deionized water for 1000 h, taken out, wiped off the moisture and dried in air, and the adhesive force and insulation voltage-withstand performance of the insulating coating are tested.

### 7. Flexibility test

Referring to GB/T 6742 for evaluation, test specimens coated with the insulating coating are bent on spindles of different diameters by 180°, and a minimum curvature diameter at which the insulating coating does not crack or peel off is reported.

The performance test results and brief analysis are as follows:

**Table 1.2 Performance test results of insulating protective film**

| Item | Flanging 3mm warping height (mm) | Shear strength (MPa) | Shear strength after aging (MPa) |
|---|---|---|---|
| Example 1.1 | 0 | 9.5 | 8.6 |
| Example 1.2 | 1 | 8.8 | 7.5 |
| Example 1.3 | 0 | 7.9 | 7.0 |
| Example 1.4 | 3 | 4.7 | 2.5 |
| Example 1.5 | 3 | 5.5 | 3.5 |

According to Tables 1.1-1.2, brief analysis is as follows:
In Examples 1.1-1.3, the adhesive layer and the base film layer have appropriate thicknesses, and the insulating protective film has good shear strength, anti-aging performance, and anti-flanging performance. Within a certain range, as the thicknesses of the adhesive layer and the base film layer increase, the shear strength, the anti-aging performance, and the anti-flanging performance of the insulating protective film also gradually increase.
In Examples 1.1-1.2 and Example 1.4, the thickness of the adhesive layer is similar, and Examples 1.1 and 1.2 have a more suitable base film layer thickness. The shear strength and the anti-aging performance of the insulating protective films in Examples 1.1 and 1.2 are better.
In Examples 1.4 and 1.5, the total thicknesses of the adhesive layer and the base film layer are the same. In Example 1.5, two layers of each of the adhesive layer and the base film layer are provided, and compared with Example 1.4 in which only one layer of each of the adhesive layer and the base film layer is provided, the shear strength and the anti-aging performance of the insulating protective film in Example 1.5 are better.

**Table 2.3. Performance test results of insulating protective films in various examples**

| Item | Flanging 3mm warping height (mm) | 180° peel strength (N/25mm) | Shear strength (MPa) | Shear strength after aging (MPa) | Insulation voltage-withstand performance |
|---|---|---|---|---|---|
| Example 2.1 | 2 | 7.4 | 7.1 | 5.8 | OK |
| Example 2.2 | 1 | 6.5 | 6.2 | 4.3 | OK |
| Example 2.3 | 0 | 9.8 | 8.9 | 7.5 | OK |
| Example 2.4 | 0 | 4.2 | 3.9 | 3.4 | NG |
| Example 2.5 | 3 | 12.3 | 11.2 | 10.4 | NG |
| Example 2.6 | 5 | 17.2 | 15.6 | 13.2 | NG |
| Example 2.7 | 1 | 7.2 | 7.3 | 5.5 | NG |
| Example 2.8 | 1 | 8.9 | 8.5 | 7.1 | OK |
| Example 2.9 | 2 | 10.5 | 9.3 | 8 | OK |
| Example 2.10 | 3 | 11.5 | 10.4 | 8.5 | NG |
| Example 2.11 | 5 | 3.5 | 4.1 | 2.2 | NG |
| Example 2.12 | 3 | 6.6 | 7.6 | 5.2 | NG |
| Example 2.13 | 2 | 10.6 | 9.4 | 8.1 | Ok |
| Example 2.14 | 3 | 12.2 | 10.3 | 6.4 | NG |
| Example 2.15 | 0 | 7.7 | 7.5 | 6.1 | NG |
| Example 2.16 | 0 | 8.5 | 8.6 | 7.3 | OK |
| Example 2.17 | 0 | 7.2 | 6.7 | 5.5 | OK |
| Example 2.18 | 3 | 7.6 | 7.2 | 5.6 | NG |
| Example 2.19 | 1 | 6.9 | 7.1 | 5.9 | OK |
| Example 2.20 | 2 | 7.9 | 7.4 | 5.8 | NG |

**Table 2.4. Performance test results of insulating protective films in various examples**

| Item | 180° peel strength (N/25mm) | Shear strength (MPa) | Shear strength after aging (MPa) | Insulation voltage-withstand performance |
|---|---|---|---|---|
| Example 2.21 | 3.1 | 2.7 | 2.3 | NG |
| Example 2.22 | 3.4 | 2.5 | 1.7 | NG |

According to Tables 2.1-2.4, brief analysis is as follows:
In Examples 2.1-2.3, the components of the adhesive meet the appropriate types and usage amounts. Compared with Example 2.22, the peel strength, the shear strength and the shear strength after aging of the insulating protective film are significantly improved.
In Examples 2.3-2.6 and Example 2.21, the contents of acrylic resin in the adhesive are different, and the mass ratios of the other components remain the same. Compared with Example 2.3, the contents of acrylic resin in Examples 2.4 and 2.21 are lower, and Example 2.3 has higher peel strength, shear strength, higher shear strength after aging and higher insulation voltage-withstand performance. The contents of acrylic resin in Examples 2.5 and 2.6 are higher, and Example 2.3 has higher insulation voltage-withstand performance.
In Example 2.3 and Examples 2.7-2.10, the contents of active monomers in the adhesive are different, and the mass ratios of the other components remain the same. Compared with Example 2.3, the contents of active monomers in Examples 2.7 and 2.8 are lower, and Example 2.3 has a lower flanging warping height, higher peel strength, higher shear strength and higher shear strength after aging. The contents of active monomers in Examples 2.9 and 2.10 are higher, and Example 3 has a lower flanging warping height. Compared with Example 2.3 and Examples 2.7-2.10, Example 2.3 and Examples 2.8-2.9 all have higher insulation voltage-withstand performance.
In Example 2.3 and Examples 2.11-2.14, the contents of photoinitiators in the adhesive are different, and the mass ratios of the other components remain the same. Compared with Example 2.3, the contents of photoinitiators in Examples 2.11 and 2.12 are lower, and Example 2.3 has a lower flanging warping height, higher peel strength, higher shear strength, higher shear strength after aging, and higher insulation voltage-withstand performance. The contents of photoinitiators in Examples 2.13 and 2.14 are higher, and Example 3 has a lower flanging warping height. Moreover, compared with Example 2.3 and Examples 2.11-2.14, Example 2.3 and Examples 2.12-2.13 all have higher insulation voltage-withstand performance.
In Examples 2.3, 2.15 and 2.16, the contents of coupling agents in the adhesive are different, and the mass ratios of the other components remain the same. Compared with Example 2.3, the contents of coupling agents in Examples 2.15 and 2.16 are higher, and Example 2.3 has higher peel strength, higher shear strength and higher shear strength after aging. Moreover, compared with Example 2.3, Examples 2.15 and 2.1, Examples 2.3 and 2.16 both have higher insulation voltage-withstand performance.
In Examples 2.3, 2.17 and 2.19, the adhesives of Examples 2.17 and 2.19 use only one photoinitiator, and the peel strength, shear strength and shear strength after aging of the insulating protective film in Example 2.3 are higher.
In Examples 2.3, 2.18 and 2.20, the adhesives of Example 2.18 and 2.20 do not contain the coupling agent, and the insulating protective film in Example 2.3 has higher peel strength and insulation voltage-withstand performance, and lower flanging warping height.

**Table 3.3 Performance of ultraviolet curable ink in various examples**

| Item | Viscosity/ cps (50°C) | Insulation voltage-withstand | Adhesive force | Shear strength (MPa) | Flexibility (mm) | Adhesive force (Dual 85 aging) | Shear strength/ MPa (Dual 85 aging) | Adhesive force after soaking in water at 85°C | Insulation voltage-withstand after soaking in water at 85°C |
|---|---|---|---|---|---|---|---|---|---|
| Example 3.1 | 35 | OK | Level 0 | 13.8 | 10 | Level 0 | 8.2 | Level 1 | OK |
| Example 3.2 | 80 | OK | Level 0 | 15.9 | 32 | Level 2 | 6.5 | Level 3 | NG |
| Example 3.3 | 27 | OK | Level 0 | 9.7 | 8 | Level 1 | 4.9 | Level 2 | NG |
| Example 3.4 | 22 | OK | Level 0 | 9.6 | 8 | Level 1 | 4.6 | Level 2 | NG |
| Example 3.5 | 64 | OK | Level 0 | 14.5 | 15 | Level 2 | 8.5 | Level 3 | NG |
| Example 3.6 | 49 | OK | Level 0 | 14.1 | 15 | Level 1 | 8.6 | Level 2 | NG |
| Example 3.7 | 21 | OK | Level 0 | 9.2 | 8 | Level 1 | 4.4 | Level 2 | NG |
| Example 3.8 | 38 | OK | Level 1 | 11.5 | 8 | Level 3 | 6.1 | Level 3 | NG |
| Example 3.9 | 34 | OK | Level 0 | 14.1 | 20 | Level 1 | 8.2 | Level 1 | NG |
| Example 3.10 | 35 | OK | Level 1 | 14.5 | 32 | Level 3 | 4.3 | Level 3 | NG |
| Example 3.11 | 35 | OK | Level 1 | 10.2 | 8 | Level 1 | 2.8 | Level 2 | NG |
| Example 3.12 | 55 | OK | Level 0 | 14.5 | 10 | Level 0 | 8.4 | Level 1 | OK |
| Example 3.13 | 30 | OK | Level 1 | 10.7 | 15 | Level 3 | 4.8 | Level 4 | NG |
| Example 3.14 | 43 | OK | Level 0 | 12.7 | 10 | Level 0 | 8.2 | Level 1 | OK |
| Example 3.15 | 35 | OK | Level 0 | 14.9 | 10 | Level 0 | 8.2 | Level 1 | OK |
| Example 3.16 | 33 | OK | Level 0 | 13.9 | 15 | Level 0 | 7.7 | Level 1 | OK |
| Example 3.17 | 37 | OK | Level 0 | 12.7 | 15 | Level 0 | 6.5 | Level 2 | NG |
| Example 3.18 | 39 | OK | Level 0 | 13.6 | 20 | Level 1 | 5.9 | Level 3 | NG |
| Example 3.19 | 36 | OK | Level 1 | 11.6 | 10 | Level 1 | 6.1 | Level 1 | OK |
| Example 3.20 | 35 | OK | Level 0 | 14.3 | 25 | Level 1 | 7.8 | Level 1 | OK |
| Example 3.21 | 35 | OK | Level 0 | 14.1 | 15 | Level 0 | 8.3 | Level 1 | OK |
| Example 3.22 | 35 | OK | Level 0 | 13.7 | 10 | Level 0 | 8.1 | Level 1 | OK |
| Example 3.23 | 21 | NG | Level 0 | 9.2 | 8 | Level 1 | 3.9 | Level 3 | NG |
| Example 3.24 | 23 | OK | Level 0 | 14.7 | 25 | Level 1 | 8.4 | Level 2 | NG |
| Example 3.25 | 34 | OK | Level 0 | 13.3 | 15 | Level 3 | 5.3 | Level 4 | NG |
| Example 3.26 | 42 | OK | Level 1 | 10.3 | 15 | Level 3 | 4.2 | Level 4 | NG |
| Example 3.27 | 186 | OK | Level 0 | 13.5 | 15 | Level 0 | 7.1 | Level 2 | NG |
| Example 3.28 | 153 | OK | Level 0 | 14.7 | 20 | Level 1 | 8.4 | Level 2 | NG |
| Example 3.29 | 357 | OK | Level 0 | 14.5 | 25 | Level 1 | 8.6 | Level 2 | NG |

According to Tables 3.1-3.3, brief analysis is as follows:
By comparing Examples 3.1-3.26 and Examples 3.27-3.29, it can be seen that the first monomers and the second monomers of Examples 3.1-3.26 are both active monomers with the viscosity less than or equal to 10 cps at 50°C and meet the ratio relationship, and the viscosity of the prepared ultraviolet curable ink at 50°C is less than or equal to 100 cps; the first monomer of Example 3.27 is an active monomer with the viscosity greater than 10 cps at 50°C (lauryl methacrylate, with a viscosity of 47 cps at 50°C), and the viscosity of the prepared ultraviolet curable ink at 50°C is as high as 186 cps; the second monomer of Example 3.28 is an active monomer with the viscosity greater than 10 cps at 50°C (ethoxylated bisphenol A dimethacrylate, with a viscosity of 39 cps at 50°C), and the viscosity of the prepared ultraviolet curable ink at 50°C is as high as 153 cps; and the first monomer of Example 3.29 is an active monomer with the viscosity greater than 10 cps at 50°C (lauryl methacrylate, with a viscosity of 47 cps at 50°C), the second monomer is an active monomer with the viscosity greater than 10 cps at 50°C (ethoxylated bisphenol A dimethacrylate, with a viscosity of 39 cps at 50°C), and the viscosity of the prepared ultraviolet curable ink at 50°C is as high as 357 cps.

From the comparison between Example 3.1 and Example 3.23, it can be seen that Example 3.23 does not have the second monomer. Compared with Example 3.1, Example 3.1 has good insulation voltage-withstand performance and higher shear strength.

From the comparison between Example 3.1 and Example 3.24, it can be seen that Example 3.24 does not have the first monomer. Compared with Example 3.1, Example 1 has good flexibility.

From the comparison between Example 3.1 and Example 3.25, it can be seen that Example 3.25 does not have the hydrophobic monomer. Compared with Example 3.1, Example 3.1 has good adhesive force after soaking in water at 85°C and good insulation voltage-withstand after soaking in water at 85°C.

From the comparison between Example 3.1 and Example 3.26, it can be seen that Example 3.26 does not have the coupling agent. Compared with Example 3.1, Example 3.1 has good adhesive force after soaking in water at 85°C and good insulation voltage-withstand after soaking in water at 85°C.

Finally, it should be noted that: the above examples are merely used to illustrate the technical solutions of the present application, instead of imposing any limitation on the present application. Although the present application has been described in detail with reference to the aforementioned examples, those ordinarily skilled in the art should understand that they can still modify the technical solutions recorded in all the aforementioned examples, or equivalently replace part or all of the technical features thereinto. These modifications and replacements are not intended to make the essence of corresponding technical solutions depart from the scope of the technical solutions of the examples of the present application, and should be encompassed within the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery shell, comprising a shell side wall and a shell end wall which are mutually connected, wherein an attachment weld is provided at a joint between the shell side wall and the shell end wall and is positioned at an end face of the battery shell;
wherein, the battery shell further comprises an insulating protective film and an insulating coating, an outer side of the shell side wall is connected to the insulating protective film, and an outer side of the attachment weld is covered with the insulating coating.

2. The battery shell according to claim 1, wherein an edge region of the insulating protective film is connected to the insulating coating.

3. The battery shell according to claim 1, wherein a surface area of the outer side of the shell side wall is S1, a surface area of a region corresponding to the insulating protective film in the outer side of the shell side wall is S2, and S2=S1×(80%-95%).

4. The battery shell according to any one of claims 1 to 3, wherein in a circumferential direction of the shell side wall, a ratio of an overlapping dimension of two ends of the insulating protective film to an outer side circumference of the shell side wall is (3-10):(145-750).

5. The battery shell according to any one of claims 1 to 4, wherein the insulating coating has a first coating portion and a second coating portion which are mutually connected, the first coating portion is positioned at an end face of the battery shell, at least a part of the first coating portion covers the outer side of the attachment weld, and the second coating portion is positioned on the outer side of the shell side wall and connected to the edge region of the insulating protective film.

6. The battery shell according to claim 5, wherein the second coating portion covers an end part of the outer side of the shell side wall, and at least a part of the second coating portion is covered by the insulating protective film.

7. The battery shell according to claim 5, wherein at least a part of the second coating portion covers an outer side of the edge region of the insulating protective film.

8. The battery shell according to any one of claims 1 to 4, wherein an end face of the edge region of the insulating protective film is connected to the insulating coating.

9. The battery shell according to any one of claims 1 to 8, wherein the outer side of the shell end wall and the outer side of the attachment weld are both covered with the insulating coating.

10. The battery shell according to any one of claims 1 to 8, wherein the insulating coating is annular.

11. The battery shell according to any one of claims 5 to 7, wherein the surface area of the outer side of the shell side wall is S1, a surface area of a region corresponding to the second coating portion in the outer side of the shell side wall is S3, and S3=S1×(5%-20%).

12. The battery shell according to any one of claims 5 to 7 and 11, wherein in a height direction of the shell side wall, a dimension of the shell side wall is H1, an overlapping dimension of the second coating portion and the insulating protective film is H2, and H2=H1×(2%-10%).

13. The battery shell according to any one of claims 1 to 12, wherein a thickness of the insulating protective film is in a range from 50 µm to 120 µm.

14. The battery shell according to any one of claims 1 to 13, wherein a thickness of the insulating coating is in a range from 50 µm to 120 µm.

15. The battery shell according to any one of claims 1 to 14, wherein the insulating protective film comprises at least one connecting layer and at least one base film layer, the insulating protective film is connected to the outer side of the shell side wall through the connecting layer, and a surface layer of the insulating protective film away from the shell side wall is the base film layer;
wherein, the connecting layer is formed by photocuring an adhesive layer including an adhesive, and the adhesive comprises 60wt% to 95wt% of acrylic resin, 3wt% to 35wt% of an active monomer, and 0.8wt% to 10wt% of a photoinitiator.

16. The battery shell according to claim 15, wherein the photoinitiator comprises one or more of ethyl 2,4,6-trimethylbenzoylphenylphosphonate, 2,4,6-trimethylbenzoyldiphenylphosphine oxide, 1-hydroxycyclohexylphenyl ketone, 2-isopropylthioxanthone, 2-phenylbenzyl-2-dimethylamine-1-(4-morpholinobenzylphenyl)butanone, and 2-hydroxy-2-methyl-1-phenylpropanone.

17. The battery shell according to claim 15 or 16, wherein a total thickness of the base film layer is T1, and a total thickness of the adhesive layer is T2;
wherein, T2=T1×(50%-150%);
optionally, T2=T1×(80%-120%).

18. The battery shell according to any one of claims 1 to 17, wherein the insulating coating comprises a photocurable product of an ultraviolet curable ink;
wherein the ultraviolet curable ink comprises 10wt% to 30wt% of acrylic resin, 40wt% to 80wt% of an active monomer, 2wt% to 10wt% of a photoinitiator, less than or equal to 15wt% of a hydrophobic monomer, less than or equal to 5wt% of a coupling agent and less than or equal to 10wt% of pigment; and viscosity of the active monomer at 50°C is less than or equal to 10 cps.

19. The battery shell according to claim 18, wherein the active monomer comprises a first monomer, and the first monomer is a monofunctional monomer.

20. The battery shell according to claim 19, wherein the active monomer further comprises a second monomer, functionality of the second monomer is greater than or equal to 2, and mass of the second monomer is 30% to 50% of mass of the first monomer.

21. The battery shell according to any one of claims 18 to 20, wherein the ultraviolet curable ink comprises 0.1wt% to 15wt% of a hydrophobic monomer, and a contact angle between the hydrophobic monomer and water is greater than or equal to 90°.

22. A battery cell, comprising the battery shell according to any one of claims 1 to 21.

23. A battery, comprising the battery cell according to claim 22.

24. An electrical device, comprising the battery shell according to claim 22 or the battery cell according to claim 23.
